# EUROPEAN PATENT SPECIFICATION

(11) **EP 4 249 889 B1**
(45) Date of publication and mention of the grant of the patent: **27.11.2024**
(21) Application number: 22163930.5
(22) Date of filing: 23.03.2022
(51) Int. Cl.: G01N 1/28, G01N 15/14, G01N 21/64, G01N 15/10, G02B 21/14, G02B 21/16

(54) **METHODS FOR ANALYZING BIOPSIES AND BIOLOGICAL SAMPLES**
VERFAHREN ZUM ANALYSIEREN VON BIOPSIEN UND BIOLOGISCHEN PROBEN
PROCÉDÉS D'ANALYSE DE BIOPSIES ET D'ÉCHANTILLONS BIOLOGIQUES

(43) Date of publication of application: 27.09.2023
(73) Proprietor: Nebulum Technologies Co., Ltd., Zhubei City (TW)
(72) Inventor: HUANG, Yuan-Hsiao, Zhubei City (TW)
(74) Representative: Carpmaels & Ransford LLP

(56) References cited:
- WO-A2-2004/025295
- US-A1- 2019 113 423
- US-A1- 2021 018 441
- FLOOD P.M. ET AL: "ZEISS Lightsheet Z.1 Sample Preparation (White Paper)", ZEISS, 1 September 2013 (2013-09-01), pages 1 - 34, XP055239030, Retrieved from the Internet <URL:http://hcbi.fas.harvard.edu/files/lightsheetz1_sample-preparation_zeiss.pdf> [retrieved on 20160106]

## Description

### FIELD OF INVENTION

The present invention relates to matrix-assisted methods for analyzing biological specimens, particularly liquid biopsies, and other liquid samples, by microscopy, including fluorescence microscopy.

### BACKGROUND

Liquid biopsies are typically obtained from bodily fluids, such as peripheral blood, bone marrow, cerebrospinal fluid, urine, saliva, sputum, tears, seminal fluid, or other tissue sources. Biomarkers, or components, in the liquid samples can be evaluated or measured for various diagnostic applications, such as disease screening, detection, staging, and surveillance.

The biomarkers in a liquid biopsy can include cellular and extracellular components, the selection of which can depend on multiple factors, such as the underlying medical condition or treatment status. For example, biomarkers can correspond to antigens or other attributes that distinguish rare circulating cells, such as circulating tumor cells (CTCs) and CTC clusters derived from solid tumors or metastases, as well as circulating endothelial cells (CEC) associated with cardiovascular and other conditions. See, e.g., Lim et al. 2019, NPJ Prec. Oncol. 3, 23; Rostami et al. 2019, J. Sci: Adv. Mat. Dev. 4, 1-18; Schmidt et al. 2015, Trends Cardiovasc. Med. 25, 578-587. Such cells can be further processed for genetic abnormalities and other molecular characteristics. Biomarkers can also identify extracellular components, such as circulating tumor-derived factors, secreted proteins, released vesicles and exosomes, and cell-free nucleic acids. Cell-free nucleic acids include cell-free tumor DNA (ctDNA), which has applications in cancer monitoring, as well as cell-free fetal DNA (cffDNA), which is found in maternal blood and has applications in non-invasive prenatal testing. Campos et al. 2018, Cancer J. 24, 93-103; Sifakis et al. 2014, Mol. Med. Rep. 11, 2367-2372. Subsequent genomic and protein processing can allow further analysis of extracellular biomarkers.

Typical biopsy methods can encompass several approaches. See, e.g., Harouaka et al., 2014, Pharmacol. Ther. 141, 209-221 One common approach is based on immunoaffinity, such as microfluidics and microchip-based methods, which allow detection of antibodies bound to cellular and extracellular targets. These methods rely on antibody-antigen binding between floating cells and antibody-coated surfaces, and are therefore limited to antigens present on the target cell surface, such as membrane proteins. In addition, the efficacy of these methods depends on sufficient levels of cell surface antigens to allow efficient and specific recognition by the antibodies, (e.g., low EpCAM expression on a cell surface may result in poor cell to chip surface binding). These methods generally have low cell flow rates that preclude effective analysis of complex samples. Accordingly, the scope, sensitivity, specificity, and throughput of such methods, as well as other immunoaffinity methods (such as ones based on magnetic beads) is limited.

Another common approach is cytology: directly examining the cells under a microscope. However, this approach is limited to examining only a small number of cells at a time (e.g., as a single layer on a glass slide) due to the light-scattering nature of cells; it is therefore not practical - and not economically feasible - to use this approach to detect rare targets in millions of cells that may be present in even 2 c.c. of blood.

In another approach, flow cytometry, thousands of cells per second pass one by one through one or more laser beams, where they can give rise to different patterns of light scattering (depending, for example, on cell size and granularity) and fluorescence emission (depending on what fluorescent probes are bound to the cells). See, e.g., Flow cytometry: retrospective, fundamentals and recent instrumentation, Cytotechnology, 2012 Mar; 64(2): 109-130. However, flow cytometry methods do not provide high resolution and confidence when cells of interest are rare. For example, they do not offer direct visual inspection of cells to confirm their potential morphological or functional properties. Furthermore, gating issues can arise based on fluorescence signal intensity and the pixels captured by the detector (which does not provide, information on labeling quality or morphological details of the analyzed sample). For example, only small gating changes or perturbations can lead to the exclusion of CTC cells and other rare cells (e.g., CECs) that are small in size or have a faint fluorescent signal.

In view of these and other limitations, there remains a need for further improvements in liquid biopsy analysis. The current invention addresses these and other needs in the art by providing methods and compositions that label, disperse, and capture biopsy components in a 3-dimensional gel or other non-liquid form. When maintained in this form, discrete and rare biomarkers can be detected with high resolution and sensitivity by rapid imaging methods, such as light sheet fluorescent microscopy and other methods. More generally, these methods are applicable to components in any sample - biological or non-biological - whose resolution can be improved by dispersal in a liquid and subsequent capture and imaging in a non-liquid state.
US 2021/0018441 A1 describes *"a quantitative liquid biopsy diagnostic system and methods for performing diagnostic assays. The system offers a liquid biopsy method using circulating tumor cells (CTCs) or White Blood Cells (WBC) subpopulations for precision cancer diagnosis, early detection of disease evolution, and cancer patient management. The [method] utilizes selective plane illumination microscopy (SPIM) to deliver high sensitivity and specificity for the detection and isolation of individual CTCs, superseding the efficacy of existing methodologies for early cancer detection. Isolated CTCs can be analyzed for their molecular fingerprint, which can lead to matching genetic abnormalities with specific drug treatments.* ".

### BRIEF DESCRIPTION OF THE DRAWINGS

FIG. 1 is a schematic overview of a matrix-assisted protocol, in accordance with certain embodiments of the disclosure, to prepare and analyze a liquid biological sample. Stages in the protocol can include (1) cell preparation; (2) sample gelling and clearing; (3) sample mounting and imaging; and (4) visualization and analysis of the sample.
FIGS. 2A-2C depict images obtained from the lightsheet microscopy imaging chamber as described in Example 2. Scale bar in FIG 2C (20 µm).
FIGS. 3A-3C depict images obtained from the lightsheet microscopy imaging chamber as described in Example 3. Scale bars: FIG 3A (50 µm); FIG 3B (300 µm); FIG 3C (50 µm).
FIGS. 4A-4D depict images obtained from the lightsheet microscopy imaging chamber as described in Example 4. Scale bar in FIG 4B (30 µm).
FIG. 5A and 5B depict 3D gel data for Patient A as described in Example 5. Scale bar in FIG. 5A: (150 µm).
FIG. 6A and 6B depict 3D gel data for Patient B as described in Example 5. Scale bars: FIG 6A (200 µm); FIG 6B (2 µm).

### SUMMARY

The present invention provides a matrix-assisted method, such as those based on gel formation, to prepare and analyze components in biological and non-biological samples, including liquid biological specimens, as described further herein. The liquid specimen can originate from any source, including humans and animals. In embodiments, it can derive from a liquid biopsy obtained from peripheral blood, bone marrow, cerebrospinal fluid, and other tissue sources, all of which may be further processed. In embodiments, it can derive from a liquid dispersal of materials obtained from other sources, including solid sources, such as from a solid tissue biopsy. The method of the present invention is defined in claim 1.

The method of the invention comprises adding a solidifying agent (e.g., a gelling agent) to a biological specimen comprising biological materials; generating a solidified sample (e.g., a gelled sample) comprising dispersed biological materials; and imaging the solidified sample to identify one or more components in the biological materials. The biological materials can include any biomolecules, including nucleic acids, proteins, and small molecules, which in embodiments, can serve as biomarkers of medical conditions or disease states.
For example, the biomolecules can serve as biomarkers of rare circulating cells in the blood, such as circulating tumor cells, circulating endothelial cells, and other cells and cell clusters that may be present in the biological specimen. In embodiments, the biological materials in the specimen can
be enriched, for example by concentrating cells from a large amount of blood or other sample source. Advantageously, however, the presently disclosed method does not require any preselection or pre-screening of the cells; instead, the instant method allows for unbiased analysis of a sample of unselected or unscreened cells by detecting biomarker labels, such as antibodies or nucleic acid probes, bound to biological materials in the specimen, for example by detecting labeled antibodies identifying specific cell surface markers in the specimen.
According to the invention, the solidifying agent comprises a mixture of chemical monomers and cross linkers to create a synthetic chemical gel having a chemically cross-linked polymer network.

In embodiments, the step of adding a solidifying agent in any of the methods can comprise adding hydrogel precursors, to the sample; adding the agent directly to a sample under conditions that allow formation of a solid, such as a gel; forming a hydrogel, or other methods, as disclosed herein. Prior to adding the solidifying agent, the methods can comprise subjecting components of biological specimen to a fixation procedure, as described herein, and they can also comprise labeling one or more biomolecules, such as a protein or nucleic acid, with a molecular probe. Molecular probes include antibodies, dyes, and nucleic acid probes known in the art, including those as described herein. In embodiments, the probes can be used to identify circulating tumor cells and clusters, as well as cell-free tumor or fetal-derived DNA, and genetic and structural changes in cell nuclei, such as DNA and chromosomal abnormalities, amplifications, deletions, and translocations.

In alternative embodiments, the step of adding a solidifying agent to a liquid specimen comprises mixing a sample containing biological materials (e.g., a pellet comprising biological materials) with a mixture or solution comprising one or more hydrogel precursors, and altering the conditions of the mixture to induce solidification (e.g., gelation). Formation of a hydrogel is known in the art, and can be accomplished by a variety of methods according to the subject disclosure. For example, a second agent (e.g., a Ca+ ion or crosslinker) can be added in amounts sufficient to induce gelation of the hydrogel precursors according to methods known in the art.

For example, the specimen can be processed as described herein, including with steps in which the sample is centrifuged to obtain a pellet, and resuspended in alginate-hydrogel precursor solution and mixed with an adequate amount of CaCl₂ solution (e.g., 0.2M) to initiate gelling. In this exemplary method, the gel would form within a short period of time (e.g., about 15 minutes) which can then be mounted for refractive index matching (if necessary) and imaging.

The step of generating a solidified sample comprising dispersed biological materials in any of the methods can comprise transferring the sample to a sample holder after adding the solidifying agent and allowing solidification to occur. In other embodiments, the sample can be prepared directly in a sample holder, to which the solidifying agent is added, therefore consolidating the pre-gelling and solidification steps in a single tube. The sample can be stirred, shaken, vibrated or otherwise agitated in the sample holder prior to solidification to ensure dispersal of the materials. In embodiments, the solidified sample has a shape suitable for imaging, such as a block, cylindrical shape, or any other form that is compatible with the desired imaging system. The matrix-assisted methods according to the invention comprise introducing a refractive index matching material to the solidified sample. In embodiments, the solidified sample comprising the dispersed biological materials is transferred to a clearing (or equilibration) solution to attain refractive index matching. For example, if a sample of dispersed cells is prepared in a clear matrix, then labelled molecules on the surface of (or in) the individually dispersed cells may be suitably imaged without preincubation in a refractive index matching material (e.g., a refractive index-matching solution). In certain embodiments, solidification includes mixing the biological sample with a refractive index-matching material (e.g., a refractive index-matching solution), thereby preventing the need for separate processing with a refractive index-matching material.

The step of imaging the solidified sample can comprise, in embodiments, imaging a suitably shaped solid sample, such as a block, by a variety of microscopic techniques, including fluorescence microscopy, and more particularly, fluorescence lightsheet microscopy. In embodiments, imaging allows single cell identification in the solidified sample, and more particular, for example, can include detecting one or more cancer cells, such as circulating tumor cells, or cancer markers. The size of the solidified sample can vary, depending on the application, sensitivity and biomolecules being assayed. In embodiments, imaging can be used to analyze cell-cell interactions, as well as morphological and structural features of cells, such as size, shape, and nucleus-to-cytoplasm ratio, and features of organelles.

The methods are useful in numerous applications, which include, but are not limited to, evaluating, diagnosing, or monitoring a disease, for example by microscopically analyzing a liquid and/or tissue biopsy; screening candidate therapeutic agents for their effect on a sample (e.g., a blood or tissue sample) in a disease state; and assessing the expression of a panel of biomarkers in sample.

### DETAILED DESCRIPTION

The disclosure provides matrix-assisted methods and compositions to analyze a liquid sample, such as a liquid biopsy, for the presence of one or more biomarkers. In embodiments, the methods and compositions are used to solidify dispersed materials in the sample to capture and immobilize them in a three-dimensional state. Subsequently, biomarkers of interest, such as rare disease markers, that may be present in the materials can be detected and resolved with high sensitivity and specificity. The matrix assisted methods include the use of a solidifying agent, such as hydrogel precursors, to transform the liquid sample into a solid sample with dispersed components.

In embodiments, the disclosure provides a three-dimensional imaging approach to detect biomarkers, including rare molecules, such as cancer cell markers, using matrix-assisted methods and compositions for analyzing liquid biopsies and other liquid samples by microscopy, including fluorescence microscopy.

In embodiments, the biomarkers are indicative of cellular components, such as components of rare circulating cells, such as circulating tumor cells and circulating endothelial cells. For example, the biomarkers may include a cell-surface protein, morphological marker, or nucleic acid sequence that can identify such tumor cells. In embodiments, the biomarkers are indicative of extracellular components, such as extracellular DNA, proteins, or vesicles, that indicate particular diseases or health states.

The biomarkers can be labeled by known techniques, as described herein, and they can be detected - even in complex samples - by a broad arrange of imaging methods, and more particularly, by fluorescence microscopy, including light sheet fluorescence microscopy and other microscopy methods.

### Terms and Definitions

Unless defined otherwise, technical and scientific terms used herein have the same meaning as commonly understood by a person of ordinary skill in the art. Any methods, devices and materials similar or equivalent to those described herein can be used in the practice of this invention. The following definitions are provided to facilitate understanding of certain terms used frequently herein and are not meant to limit the scope of the present disclosure.

As used herein, the term "about" or "approximately" means a range of values including the specified value, which a person of ordinary skill in the art would consider reasonably similar to the specified value. In embodiments, "about" means within a standard deviation using measurements generally acceptable in the art. In embodiments, "about" means a range extending to +/- 10% of the specified value. In embodiments, "about" means the specified value.

It is understood that, whether the term "about" is used explicitly or not, every quantity given herein is meant to refer to both the actual given value and the approximation of such given value that would reasonably be inferred based on the ordinary skill in the art, including equivalents and approximations due to the experimental and/or measurement conditions for such given value. Accordingly, for any embodiment of the disclosure in which a numerical value is prefaced by "about" or "approximately," the disclosure includes an embodiment in which the exact value is recited. Conversely, for any embodiment of the disclosure in which a numerical value is not prefaced by "about" or "approximately", the disclosure includes an embodiment in which the value is prefaced by "about" or "approximately".

Unless indicated otherwise, concentrations provided as percentages or weight (wt) percentage refer to weight/volume (w/v) concentrations. For example, 2% or 2 wt% of a component in a 100 ml solution corresponds to 2 grams of that component.

As used herein, the terms "a," "an," and "the" are to be understood as meaning both singular and plural, unless explicitly stated otherwise. Thus, "a," "an," and "the" (and grammatical variations thereof where appropriate) refer to one or more.

Furthermore, although items, elements or components of the embodiments may be described or claimed in the singular, the plural is contemplated to be within the scope thereof, unless limitation to the singular is explicitly stated.

The terms "comprising" and "including" are used herein in their open, non-limiting sense. Other terms and phrases used in this document, and variations thereof, unless otherwise expressly stated, should be construed as open ended, as opposed to limiting. As examples of the foregoing: the term "example" is used to provide exemplary instances of the item in discussion, not an exhaustive or limiting list thereof. Adjectives such as "conventional," "normal," "known" and terms of similar meaning should not be construed as limiting the item described to a given time period or to an item available as of a given time, but instead should be read to encompass conventional, or normal technologies that may be available or known now or at any time in the future. Likewise, where this document refers to technologies that would be apparent or known to one of ordinary skill in the art, such technologies encompass those apparent or known to the skilled artisan now or at any time in the future.

As used herein, the term "solidified sample" refers to a sample in a non-liquid form, e.g., a solid or gel form, wherein the solid or gel material provides a supporting matrix to capture, i.e., immobilize the biological materials in a dispersed state in a 3-dimensional sample. The dispersed materials in the sample can subsequently be efficiently identified and imaged in 3-dimensions. As used herein, the term "solidifying agent" includes gelling agents capable of forming a gel, as well as epoxies and other agents which, for example, may be desirable when supporting dispersed biological materials at high densities.

As used herein, the terms "biological sample" and "biological specimen" (and depending on the context, "sample" or "specimen") refers to any biological material that comprises or is believed to comprise a biomolecule, such as a nucleic acid or protein. Samples that can be manipulated with the compositions and methods provided herein can be obtained from in vivo or in vitro sources and therefore include specimens, such as cells, tissues, viruses, and organs, dissected from a subject, such as a rodent model, as well as specimens, such as cells, tissues, and mini-organs, grown in vitro. Exemplary biological specimens include solid tissues and organs, including, but not limited to, liver, spleen, kidney, lung, intestine, thymus, colon, tonsil, testis, skin, brain, heart, muscle and pancreas tissues and organs. In embodiments, the samples are whole organs obtained from an animal, including mice, rats, and other animals. In embodiments, the biological specimen is a brain tissue or a whole brain, such as from a rodent, and more particularly, a mouse. Other biological samples include cells, viruses, and other microbes. In embodiments, the biological sample is derived from a human, animal, or plant. In embodiments, samples are derived from humans, companion animals such as dogs or cats, agricultural animals such as cows, sheep and pigs, rodents such as rats or mice, zoo animals, primates such as monkeys, and the like.

Exemplary biological samples include, but are not limited to, materials derived from biopsies, bone marrow samples, organ samples, skin fragments, organisms, and materials obtained from clinical or forensic settings. In embodiments, the biological sample is a tissue sample, preferably an organ sample. The sample can be obtained from an animal or human subject affected by disease or other pathology or suspected of same (normal or diseased), or considered normal or healthy. Specimens, such as organ and tissues sample, may be collected and processed using the methods described herein and subjected to microscopic analysis immediately following processing, or may be preserved and subjected to microscopic analysis at a future time, e.g., after storage for an extended period of time. In embodiments, the methods described herein, can be used to analyze living cells, and in other embodiments, the methods describe herein can be used to analyze fixed cells.

In particular embodiments, the biological sample is a liquid biopsy obtained from a bodily fluid, such as peripheral blood, bone marrow, cerebrospinal fluid, urine, saliva, sputum, tears, seminal fluid, or other tissue sources.

As used herein, the term "biomolecule" is interchangeable with molecule" and refers to a molecule present in a biological sample or specimen. In one aspect, the biomolecule is an endogenous biomolecule. In another aspect, the biomolecule is an exogenous biomolecule. Non-limiting examples of an exogenous biomolecule include an artificially implanted biomolecule, e.g., one transferred or expressed by a virus or a plasmid. Biomolecules include, but are not limited to, proteins, nucleic acids, lipids, carbohydrates, steroids, metabolites, and other sub-cellular structures or components within a cell, tissue, or organ. Non-limiting examples of proteins include enzymes, membrane proteins, transcription factors, synaptic proteins, and neuronal markers. In some non-limiting embodiments, the biomolecule is selected from a subunit of a macromolecule, a receptor, a receptor subunit, a membrane protein, an intermediate filament protein, a membrane pump, a transcription factor, and combinations thereof. In other non-limiting embodiments, the biomolecule is Olig2 (Oligodendrocyte transcription factor), NeuN (Neuronal Nuclear Antigen), NKCC2 (Na+K+Cl- Cotransporter 2). In other non-limiting embodiments, the biomolecule comprises an RNA. In yet other non-limiting embodiments, the biomolecule comprises a DNA molecule. In embodiments, the biomolecule is located on a structure, examples of which include flagella, cilia, synapse, synaptic spines, extracellular matrix (ECM), cell wall, cell envelope, membrane, cytoplasm, Golgi Network, mitochondria, endoplasmic reticulum (ER) (e.g., rough ER or smooth ER), nucleus, centrioles, ribosomes, polyribosomes, lysosomes, liposomes, cytoskeletal component, vesicles, granules, peroxisome, vacuoles, protoplast, tonoplast, plasmodesmata plastid, chloroplast, pseudopodia a vascular-associated structure of the brain, dense astrocytic network of the brain, or combinations thereof. In embodiments, the biomolecule is a cell marker, such as a protein expressed on the surface of a cancer cell.

In embodiments, a "biomolecule" is in a liquid biopsy sample and is evaluated or measured for diagnostic applications, such as screening, detection, staging, or surveilling (monitoring) a disease condition, such as cancer, or a medical condition, such as a metabolic disorder. In embodiments, a biomolecule is evaluated or measured in a non-invasive prenatal screening or diagnostic test..

As used herein, the term "labeling" refers to any technique and reagent that is now known or discovered in the future that can provide a signal-based indication of the presence or absence of a particular target moiety within a sample of the disclosures. Non-limiting examples of a labeling agent include a small molecule, a dye, an antibody, an enzyme, a nanoparticle, a nucleic acid probe, or a combination thereof. In some non-limiting embodiments, the labeling agent comprises a label, for example, a chromogenic label, a fluorescent label, a radionuclide-conjugated label, or a combination thereof.

One aspect of the present disclosure provides a method of analyzing a liquid sample that includes biological materials for one or more target components. In one exemplary embodiment, the method includes adding a solidifying agent to a specimen obtained from the liquid sample that includes the biological materials, generating a solidified sample comprising dispersed biological materials, and imaging the solidified sample to identify the one or more target components in the dispersed biological materials.

In embodiments, the method of analyzing a liquid sample according to the subject disclosure further includes labelling the specimen obtained from the liquid sample with one or more probes for the one or more target components prior to adding the solidifying agent; and/or labelling the solidified sample with one or more probes for the one or more target components. In one exemplary embodiment, the method includes labelling the specimen obtained from the liquid sample with one or more probes for the one or more target components prior to adding the solidifying agent. According to the invention, the method further includes introducing a refractive index matching material to the solidified sample.

In embodiments, the liquid sample is a liquid blood sample. For example, the specimen obtained from the liquid blood sample can be processed to remove red blood cells and platelets from the liquid blood sample, and/or can be a specimen includes peripheral blood mononuclear cells (PBMC) cells isolated from the liquid blood sample. Alternatively, in other applications, red blood cells, or other components of the liquid sample, can be isolated. Alternatively, the specimen can be obtained from other biological liquids and fluids obtained from a mammal (e.g., a human or rat) besides blood.

In certain embodiments, the one or more target components includes a nucleic acid, a protein, a virus, or a vesicle. In certain embodiments, the one or more target components includes an extracellular target. In certain embodiments, the one or more target components includes a cellular or intracellular target.

In embodiments, labelling, as described in any of the above embodiments, includes contacting the specimen obtained from the liquid sample with a molecular probe; and/or contacting the solidified sample from step (b) with a molecular probe. The molecular probes can individually be, for example, an antibody, a fluorescent dye or a nucleic acid probe.

In embodiments, the method of analyzing a liquid sample according to the subject disclosure further includes transferring the specimen to a sample holder. The method can further include, in exemplary embodiments, shaking or vibrating the sample in the sample holder. In exemplary embodiments, the solidified sample is a solid or gel block suitable for imaging.

In embodiments, the method of analyzing a liquid sample according to the subject disclosure further includes performing a fixation procedure on the specimen, such as by incubating the specimen (if performed prior to solidification), or the solidified sample in a fixative solution. In exemplary embodiments, the fixative solution comprises glutaraldehyde, formaldehyde, an epoxy, or a mixture of any two or more of the foregoing.

Imaging, as described in any of the above embodiments, can be accomplished, for example, using microscopy and camera technology known to those of ordinary skill in the art. For example, in embodiments, the imaging is carried out by fluorescence microscopy, such as light sheet fluorescence microscopy. In exemplary embodiments, the imaging identifies the presence or absence of a specific cell type in the solidified sample.

One exemplary embodiment of the subject disclosure provides a method of analyzing a liquid blood sample for the presence of rare circulating cells, such as, but not limited to, a circulating tumor cell. In one embodiment, the method includes labelling a specimen comprising isolated peripheral blood mononuclear cells (PBMC) obtained from the liquid blood sample with one or more probes for the rare circulating cells; adding a solidifying agent to the labelled specimen comprising peripheral blood mononuclear cells (PBMC); generating a solidified sample comprising dispersed peripheral blood mononuclear cells (PBMC); introducing a refractive index matching material to the solidified sample to provide an optically cleared solidified sample having a refractive index suitable for imaging; and imaging the solidified sample or optically cleared solidified sample to determine the presence of the one or more probes, thereby determining the presence of rare circulating cells in the liquid blood sample. The labelling can further include adding a probe for white blood cells, which can serve, for example, as a control.

In embodiments, the one or more probes recognizes a cancer specific antigen or a tumor-specific DNA or RNA sequence. For example, the one or more probes can be selected from an antibody or nucleic acid probe. In one embodiment, the one or more probes confers detection of one or more of EpCAM, HER2, CDX2, CK20, CK19, PD/PDL-1 and EGFR antigen or corresponding nucleic acid sequence.

In embodiments, the method of analyzing a liquid sample according to any of the above embodiments further includes introducing a refractive index matching material to the solidified sample. In certain embodiments, the optically cleared gelled sample is introduced to a sample holder that is immersed in a solution that includes a refractive index matching material.

In one embodiment, the solidifying agent includes a hydrogel precursor. In other embodiments, the step of generating the solidified sample comprises adding an agent to a hydrogel precursor to induce gelation.

The solidified sample can further include a probe for one or more target components in the liquid biopsy. The biologic materials include peripheral blood mononuclear cells (PBMC) and a rare circulating cells, such as circulating tumor cells, circulating epithelial cells, and circulating endothelial cells.

In embodiments, the labeling agent comprises a small molecule that is capable of binding to a particular target moiety within the tissue. Examples of small molecule dyes include DAPI, propidium iodide, lectin, phalloidin, and any other small molecule that can bind to a target moiety within the tissue. In embodiments, the small molecule inherently produces a signal, such as a fluorescence signal produced by DAPI, propidium iodide, or acridine orange. In embodiments, the small molecule is conjugated to an indicator to produce a signal, such a fluorescence signal producing indicator, e.g., in the case of a lectin dye, or a non-fluorescent signal producing indicator, e.g., a colorimetric indicator (e.g., horseradish peroxidase (HRP) or 3,3'-diaminobenzidine tetrahydrochloride (DAB)). In embodiments, the staining agent comprises an antibody, as described further herein. In embodiments, staining comprises modified nucleic acid strand-targeted detection activities. In other embodiments, staining comprises in situ hybridization such that the stain comprises a nucleotide-based probe capable of hybridizing to a predetermined sequence of nucleic acids within the tissue. In embodiments, the nucleotide-based probe comprises a label (e.g., one or more of the labels provided above) to enable signal production and detection of the nucleotide-based probe. In further embodiments, the nucleotide-based probe comprises a fluorescent label, as in fluorescent in situ hybridization (FISH).

In embodiments, the biological sample, such as a cell, tissue, organ, organism, or organ substructure, provides an endogenous signal, e.g., an endogenously fluorescent molecule. Examples of the endogenously fluorescent molecule include a fluorescent protein reporter (e.g., green fluorescent protein (GFP) or red fluorescent protein (RFP)). In other embodiments, the sample is derived from a transgenic model, and the fluorescent molecules are expressed by a constitutive or an inducible promoter. In yet other aspects, the organism is infected with a recombinant virus or transfected with a plasmid encoding the fluorescent protein. Exemplary fluorescent protein reporters include: green fluorescent protein (GFP), EGFP (enhanced GFP), BFP (Blue fluorescent protein), CFP (cyan), red fluorescent protein (RFP), wtGFP (White GFP), YFP (yellow fluorescent protein), dsRed, mCherry, mVenus, mCitrine, tdTomato, Luciferase, mTurquoise2, etc.

As noted, the liquid specimen can be labeled with a molecular probe, such as an antibody. In embodiments, the antibody is a primary antibody comprising a label that directly or indirectly produces a signal, such as a biotin label, a fluorescent label (fluorophore), an enzyme label (e.g., HRP or DAB), a coenzyme label, a chemiluminescent label, or a radioactive isotope label. In other aspects, the primary antibody is applied as the single stain (e.g., with or without additional reagents, such as a labeled streptavidin or an enzyme/coenzyme substrate to provide a signal). In embodiments, the primary antibody does not comprise a label and is instead detected by secondary antibody conjugated to a label.

Example of fluorophores that can be attached to primary or secondary antibody include: Alexa Fluor 350, Alexa Fluor 405, Alexa Fluor 488, Alexa Fluor 532, Alexa Fluor 546, Alexa Fluor 555, Alexa Fluor 568, Alexa Fluor 594, Alexa Fluor 647, Alexa Fluor 680, or Alexa Fluor 750. Other exemplary fluorophores include BODIPY FL, Coumarin, Cy3, Cy5, Fluorescein (FITC), Oregon Green, Pacific Blue, Pacific Green, Pacific Orange, Tetramethylrhodamine (TRITC), Texas Red, APC-eFluor 780, eFluor 450, eFluor 506, eFluor 660, PE-eFluor 610, PerCP-eFluor 710, Super Bright 436, Super Bright 645, Super Bright 702, Super Bright 780, Super Bright 600, Qdot 525, Qdot 565, Qdot 605, Qdot 655, Qdot 705, Qdot 800, R-phycoerythrin (R-PE), and Allophycocyanin (APC).

The solidified sample can be imaged by any microscopy-based application, and the disclosed subject matter is thus, in certain embodiments, not limited to the particular imaging technique employed. Examples of the microscopy-based application include, but are not limited to, immunofluorescence, confocal microscopy, two-photon microscopy, super-resolution microscopy, light-sheet microscopy, as well as x-ray microscopy, etc. The term "detectable agent" or "detectable label" refers to a molecule that can be used for the direct or indirect detection of a biomarker. A wide variety of detectable agents are known in the art and can be readily identified and used by a person skilled in the art. Suitable detectable agents include, but are not limited to, fluorescent dyes (e.g., fluorescein, fluorescein isothiocyanate (FITC), Oregon Green^{™}, rhodamine, Texas Red, tetrarhodamine isothiocynate (TRITC), Cy3, Cy5, Alexa Fluor^{®} 647, Alexa Fluor^{®} 555, Alexa Fluor^{®} 488), fluorescent protein markers (e.g., green fluorescent protein (GFP), phycoerythrin, etc.), enzymes (e.g., luciferase, horseradish peroxidase, alkaline phosphatase, etc.), nanoparticles, biotin, digoxigenin, metals, and the like.

The term "immunofluorescent marker" refers to a detectable agent that is an antibody or functional fragment thereof that targets a fluorescent dye to a specific molecule within or on a cell. An immunofluorescent marker can be used in methods that employ a fluorescent light microscope to produce immunostaining for a desired sample. An immunofluorescent marker can also be employed in immunocytochemistry (ICC) or immunohistochemistry (IHC) methods described herein. For example, in the context of the present disclosure, an immunofluorescent marker can be used to detect a rare circulating cell (e.g., CTC or CTC mimic) as described herein.

The term "antibody" refers to any immunoglobulin or derivative thereof, whether natural or wholly or partially synthetically produced. All antibody derivatives which maintain specific binding ability can also be used in the disclosed methods. The antibodies of this disclosure can bind specifically to a biomarker. For example, the antibodies can bind specifically to a single biomarker (e.g., chondroitin sulfate proteoglycan 4 (CSPG4)). Additionally, the antibodies can be pan-specific. For example, pan-specific antibodies of this disclosure can bind specifically to one or more members of a biomarker family (e.g., one or more members of the chondroitin sulfate proteoglycan family, including chondroitin sulfate proteoglycan 1, 2, 3, 4, 5, 6, 7 and 8). The antibody can have a binding domain that is homologous or largely homologous to an immunoglobulin binding domain and can be derived from natural sources, or partly or wholly synthetically produced. The antibody can be a monoclonal or polyclonal antibody. In some embodiments, the antibody is a single-chain antibody. In some embodiments, the antibody includes a single-chain antibody fragment. In some embodiments, the antibody can be an antibody fragment including, but not limited to, Fab, Fab, F(ab)2, scFv, Fv, dsFv diabody, and Fd fragments. Due to their smaller size antibody fragments can offer advantages over intact antibodies in certain applications. Alternatively or additionally, the antibody can comprise multiple chains which are linked together, for example, by disulfide linkages, and any functional fragments obtained from such molecules, wherein such fragments retain specific-binding properties of the parent antibody molecule. Those of skill in the art will appreciate that the antibody can be provided in any of a variety of forms including, for example, humanized, partially humanized, chimeric, chimeric humanized, etc. The antibody can be prepared using any suitable methods known in the art. For example, the antibody can be enzymatically or chemically produced by fragmentation of an intact antibody or it can be recombinantly produced from a gene encoding the partial antibody sequence.

The term "biomarker" refers to a biological molecule, or a fragment of a biological molecule, the change and/or the detection of which can be correlated with a particular physical condition or state of a rare circulating cell (e.g., CTC, CTC mimic, or CEC) or other target component. The terms "marker" and "biomarker" are used interchangeably throughout the disclosure. Such biomarkers include, but are not limited to, biological molecules comprising nucleotides, nucleic acids, nucleosides, amino acids, sugars, fatty acids, steroids, metabolites, peptides, polypeptides, proteins, carbohydrates, lipids, hormones, antibodies, regions of interest that serve as surrogates for biological macromolecules and combinations thereof (e.g., glycoproteins, ribonucleoproteins, lipoproteins). The term also encompasses portions or fragments of a biological molecule, for example, peptide fragment of a protein or polypeptide. In the context of the present disclosure, for example, exemplary biomarkers for CTCs such as circulating melanoma cells (CMCs) include chondroitin sulfate proteoglycan 4 (CSPG4), premelanosome protein (Pmel17) and S100 calcium-binding protein A1 (S100A1).

### Methods

In embodiments, the disclosure provides for analyzing materials in a liquid sample, which can comprise biological or non-biological components. Thus, the methods can be used to analyze liquid biopsies, as well as other samples with biological components. Biological components can include cellular materials, as well as extracellular materials, such as vesicles and cell-free DNA, secreted proteins, and other cell-free biomolecules.

In embodiments, the methods include the step of solidifying the liquid sample, thereby capturing (immobilizing) dispersed materials in a form that can be subsequently imaged by a microscopic application (or other imaging method). The resulting scanned image allows detection of components that are immobilized and spatially separated in 3-dimensions in the solid sample, allowing high resolution and sensitivity. Selectively labeled components, such as those labeled with a fluorescent-tagged antibody, can then be sensitively and rapidly identified, such as by fluorescent microscopy to detect labeled targets of interest.

The compositions and methods described therefore provide, in effect, a 3D scan, or image, of a liquid biopsy. Rare biomarkers, such as, but not limited to, rare circulating cells such as circulating tumor cells (and even intact circulating tumor cell clusters), or cell-free nucleic acids, can appear as discrete signals in the resulting scanned sample. This is in contrast to other methods, such as microfluidic-based applications in which such biomarkers are indirectly detected, or conventional cytology methods based on examining a small sample of overlapping cells on a standard slide.

In embodiments of the subject disclosure, the present methods offer the additional advantage of not imposing any morphological or cell-size cutoffs on the components being analyzed. For example, existing CTC detection technologies based on specific enrichment methods may inadvertently miss rare biomarkers. In addition, multiple processing steps underlying existing CTC detection methods may induce changes in cellular biomarkers that can further reduce the sensitivity and accuracy of detection methods. By contrast, embodiments of the methods described in present disclosure do not require any specific selection criteria with respect to biological materials being analyzed. Instead, they allow capture of a complex array of cellular and extracellular materials, regardless of shape and morphology, to be captured, preserved, and spatially separated in a three-dimensional solidified sample.

In exemplary embodiments, the presently disclosed methods allow for discrete resolution and identification of individual cells in the solidified sample, due to their spatial dispersal (separation) in the matrix of the solidified sample. Still further, the presently disclosed methods allow for analysis of specific details of the identified cell itself (e.g., morphological details of the cell) and the identified cells' spatial relationship to other cells within the sample. For example, in exemplary embodiments, the presently disclosed methods allow for analysis of a cluster of cells, in which one of cells within the cluster is the particular cell of interest. The morphology of the particular cell of interest can also be compared in its unbound state versus the cells' morphology in a cluster in order to ascertain, for example, a clinical progression of the disease state in the subject. In other exemplary embodiments, fragments of cells (e.g., cell fragments in white blood cells), or biomolecules secreted by cells can be analyzed according to the presently disclosed methods.

### Matrix-Assisted Methods

The disclosure provides, in part, matrix-assisted methods for processing and analyzing a liquid sample, such as a biopsy sample that may contain rare biomarkers, such as circulating tumor cells or cell-free tumor DNA.

In exemplary embodiments, the steps in the methods are used to generate an image of the dispersed components of the sample in a 3D spatial configuration. In embodiments, the methods include solidifying a liquid sample comprising dispersed biological materials in a form allowing rapid imaging, such as by lightsheet microscopy or other microscopic techniques. In embodiments, the methods comprise: (a) adding a solidifying agent to a liquid specimen comprising biological materials; (b) generating a solidified sample comprising the biological materials; and (c) imaging the solidified sample to identify one or more components in the dispersed biological materials.

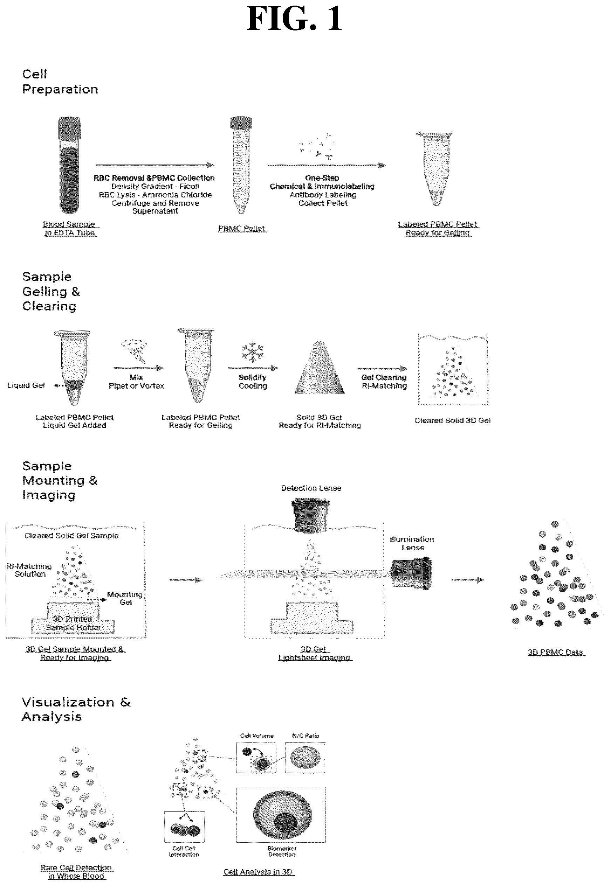

In embodiments, a liquid sample comprises biological materials and undergoes multiple processing steps, which may include, but are not limited to, those illustrated in the stages depicted in FIG. 1, which are described in detail below.

### Stage 1 - Cell Preparation

In embodiments, the methods comprise preparing or procuring a liquid sample with biological materials, which can be dispersed and subsequently captured in solid form, thereby allowing high resolution detection.

Although depicted in FIG. 1 as a blood sample, liquid samples can be derived from multiple sources, for example, bone marrow, cerebrospinal fluid, urine, saliva, sputum, tears, seminal fluid, or other fluid sources. It is further noted that while exemplary disclosure refers to CTC cells, it can be equally applied to other biomarkers that can be present in liquid biopsy samples.

In embodiments, materials in the liquid sample are obtained from a processed blood sample, such as that obtained in a liquid biopsy. Processing can involve one or more steps. For example, processing can include red blood cells removal and isolation (collection) of PBMC cells. More specifically, the blood sample may be subjected to centrifugation to remove erythrocytes (red blood cells) and platelets. Processing may also involve fractionating the blood sample into different components by well-known separation techniques, such as density gradient centrifugation. For example, such separation techniques can include red blood cell (RBC) removal and peripheral blood mononuclear (PBMC) collection or isolation.

As shown in FIG. 1, in exemplary embodiments, blood samples can be provided in a tube or vessel that includes anticoagulants, such as an evacuated blood collection tube with EDTA or heparin. The blood sample can be treated with cell separation medium, such as Lymphoprep^{™} or Ficoll-Paque^{™}, and centrifuged, and the supernatant removed. Alternatively, PBMC isolation tubes can be employed (e.g., SepMate^{™} Tubes available from Stemcell^{™} Technologies). The blood sample can also be subjected to RBC lysis, if desired, according to known techniques, such as application of commercially available or synthesized ammonium chloride solution (e.g., ammonium chloride solutions available from Stemcell^{™} Technologies) based on protocols known to those of ordinary skill in the art, which can be performed before or after centrifugation. In other embodiments, a RBC lysis is not employed as trace amounts of RBC do not affect imaging and analysis of the sample.

In exemplary embodiments, a pellet (e.g., a pellet containing isolated PBMC) is obtained, e.g., from centrifugation, and further processed as described below. In certain exemplary embodiments, the volume of the pellet can be at least 5 µl, or at least 10 µl, or at least 15 µl. In other exemplary embodiments, lower volumes of pellet are processed. In any event, the entire pellet is encapsulated in a gel, and has a size orders of magnitude larger than typical working volumes encountered in microfluidic processes known in the art.

In embodiments, the dispersed materials in the liquid sample can originate from other tissue sources. For example, they may be derived from a biopsy obtained from bodily fluids other than blood, such as bone marrow, cerebrospinal fluid, urine, saliva, sputum, tears, seminal fluid, or other fluid sources. Alternatively, the dispersed materials in the liquid sample may reflect liquid dispersal of materials from a solid biopsy, such as a tissue sample obtained from a tumor or other solid samples derived from a structure or organ of interest. In embodiments, the dispersed materials can originate from non-tissue sources. In embodiments, the biological materials in the specimen can be enriched by concentrating a large amount of sample, for example, from collecting and pelleting cells from a larger volume of blood, e.g., 2 ml, 4 ml, 8 ml, or more, or other sample source.

In embodiments, the biological materials in the specimen can be enriched by concentrating from a relatively large amount of sample, for example, from centrifuging and collecting a cell pellet from a large volume of blood (e.g., 0.5 cc or 1 cc or more) or other tissue source.

Prior to dispersal in the liquid sample, the materials may undergo additional processing steps. In embodiments, the biological materials may undergo a fixation step prior to their dispersal in a liquid sample, as discussed further herein. Alternatively, fixation may occur after the biological materials have been collected in the liquid sample. Fixation may also occur after cells are labeled. The particular fixatives that can find use according to the present disclosure are not limited and include those known to those of ordinary skill in the art. In exemplary embodiments, the fixative is a solution that includes one or more of a glutaraldehyde, a formaldehyde, an epoxy, or a cross-linked product of one or more of the foregoing.

In the case of rare targets, such as CTCs, a large amount of liquid biopsy sample can be gathered serially and collected into a single tube. For example, 2 or more ml of blood can be collected and processed and the cell pellets pooled and resuspended in a liquid sample buffer, e.g., PBS.

In embodiments, the biological materials include circulating tumor cells (CTCs), circulating tumor cell fragments, circulating tumor cell mimics, circulating epithelial cells (CECs), and similar rare circulating cells.

In embodiments, the instant methods further comprise labeling one or more targets of interest and adding a solidifying agent that will allow the dispersed labeled materials to be captured in a solid form that includes a three-dimensional cross-linked network. In other words, the solidifying agent provides a solid matrix to support 3D visualization of sample components.

Labeling can involve any method known in the art for identifying a biomolecules, including immunological and molecular means. For example, protein targets of interest - whether on a cell surface, intracellular, or extracellular - can be labeled with antibodies (or related immunological regents) that are detected directly, e.g., with a fluorescent conjugated antibody, or indirectly, e.g., with immunohistochemistry or primary antibodies and conjugated secondary antibodies. Labeling (e.g., chemical and immunolabelling) can occur in one step, or in alternative embodiments, the labelling is a multi-step process.

For example, multiple antibodies from different host species can be introduced at or about the same time, or at different times. In an exemplary embodiment, primary antibodies can be conjugated (or pre-labeled) with a tag, such as a fluorescent dye or enzyme, e.g., a fluorophore or corresponding secondary antibodies can be introduced in the mixture in one step. One-step labelling, in certain embodiments, is preferred over multi-step labelling since labeling steps generally require washing afterwards, and thus additional centrifugation and supernatant removal steps could result in cell loss or cell damage and potentially decrease signal sensitivity..

Likewise, biomolecule targets, such as DNA or RNA, can be labeled with nucleic acid probes that are detected directly or indirectly, such as for fluorescence in situ hybridization (FISH). If desired, the signal can be further amplified by available technologies, such as systems based on biotin-streptavidin binding and the polymerase chain reaction. In embodiments, the probes can identify other disease biomarkers, such as cell-free tumor or fetal-derived DNA, or can visualize genetic and structural changes in cell nuclei, such as DNA and chromosomal abnormalities, amplifications, deletions, and translocations.

Samples can also be labelled by other methods knowns in the art, for example with various dyes directed to cellular components, including fluorescent dyes such as DAPI and PI (that bind to nuclear components) and DiD or DiL (that bind to membrane components).

Labeling may also involve other steps, such as cell permeabilization or fixation, as appropriate and known in the art, to allow efficient and specific binding of the immunological or molecular reagents to the target (biomolecule) of interest. In certain embodiments, the labeling is applied prior to sample gelling and clearing. In certain embodiments, the labelling is preferably applied before obtaining a pellet, or otherwise separating components from the sample, e.g., while the biological materials are dispersed in a liquid (e.g., blood) sample.

Labeling can also be performed after cells are fixed in the gel state. For example, cells collected from the liquid sample (e.g., PBMCs obtained from blood) can be introduced to a PFA solution and a gel can be formed directly, before labelling. The gel sample can then be labeled with probes either passively or by other active immunolabeling approaches, such as those methods involving electrophoresis or pressure-based approaches. Thus, in embodiments, after being solidified a processed gel sample can be immunolabeled (i.e., labelled for the first time or to apply further labelling). Although this approach of labelling after gelation may take a longer processing time, it may also enhance preservation of the target cell number. In embodiments in which labelling occurs after solidification, a fixation procedure can be performed on the solidified sample after gel formation and subsequent to labelling.

In other embodiments, delipidation can be performed on a solidified (e.g., gelled) cell sample, where there is a need or desire to enhance sample transparency for imaging. In embodiments, solidified samples can be further crosslinked with a hydrogel precursor or epoxy and be delipidated following the CLARITY approach. See, e.g., "Advances in CLARITY-based tissue clearing and imaging," Exp Ther. Med. 2008; 16(3): 1567-1576. It should be noted, however, that due to the small stack of cells in the sample that is dispersed in the solidified sample, delipidation steps are generally not required according to most embodiments.

### Stage 2 - Sample Solidification & Clearing

In certain embodiments, solidifying a sample includes introducing a solidifying agent (e.g., a gelling agent) that will allow the biological materials to be captured in a solid form, such as a gel form, that is compatible with subsequent imaging and detection of labeled biomolecules of interest. Solidifying agents can include, but are not limited to polyacrylamide precursors. In embodiments, such agents are based on polysaccharides or proteins. See, e.g., Kar et al. 2019, Current developments in excipient science: in Fundamentals of Drug Delivery, 29-83. Alternatively, in certain embodiments, the solidifying agent can consist, or consist essentially of, a refractive index-matching solution itself, modified as necessary to provide the proper viscosity, to provide a rigid physical gel.

According to the present invention, the solidifying agent comprises a mixture of chemical monomers and cross-linkers to create a synthetic chemical gel, i.e., having a chemically cross-linked polymer network.

Solidifying (e.g., gelling) can comprise, in exemplary embodiments, dispersing or resuspending the biological materials in a gelling material that is in a liquid form.

During the pre-gelling phase, according to this exemplary embodiment, the sample remains in a fluid or molten state and the materials can be maintained in a dispersed state prior to transfer to an imaging holders in Stage 3. For example, the solidifying agent can be introduced to a labeled specimen (e.g., a labeled PBMC pellet as shown in FIG. 1) and the mixture is mixed, such as with a pipet or via a vortex mixer. Accordingly, the gelling agent in certain embodiments is a reversible gelling agent, in that the gelling agent (and sample) can be heated to achieve the fluid or molten state, if desired.

In embodiments, dispersing or re-suspending the biological sample in a mixture and forming a gel generally allows the components in the sample to be stabilized in a spatial distribution with sufficient properties, such as transparency, to allow subsequent imaging. In certain embodiments, refractive index matching materials having a refractive index (e.g., having a refractive index between 1.3-1.6 or 1.33-1.5, or a RI approximately equivalent to water) can be introduced to a gelled or pre-gelled mixture, though RI matching materials having other refractive indices can find use in other embodiments. As is known in the art, refractive index matching materials (also referred to as RI matching or RIMs) are capable of penetrating into the tissue/cell to achieve tissue/cell transparency and include, but are not limited to CUBIC-R+, RapidClear, RIMS, or ScaleView. See Neuropathol Appl Neurobiol, 2016 Oct;42(6):573-87.

In certain embodiments, a refractive index matching material is not required. For example, for small samples, laser light can still penetrate through the solidified sample and excite labeled cells or other target components. That is, refractive index differences in the solidified sample are not noticeable when a laser does not have to travel too deep to cause refraction of light. With, for example, a two-photon laser, which has more power, the laser can penetrate even deeper without being bent. Such systems are limited only by possible photo-damage of the fluorophores, and this issue does not always require the addition of refractive index matching material, such as a refractive index matching solution, to avoid such damage.

In embodiments, pre-gelling includes dispersing or resuspending the biological materials in a gelling material comprising one or more hydrogel precursors, such as polymerizable materials, monomers or oligomers, including monomers selected from the group consisting of water-soluble groups containing a polymerizable ethylenically unsaturated group. Monomers or oligomers can comprise one or more substituted or unsubstituted methacrylates, acrylates, acrylamides, methacrylamides, vinylalcohols, vinylamines, allylamines, allylalcohols. Precursors can also include polymerization initiators, cross-linkers, and other components, as are known in the art, described, for example, in WO2019023214 and WO/2020/013833.

In embodiments, the methods comprise transferring the pre-gelling mixture, while in a liquid or molten state, to sample wells in a holder. In embodiments, the wells in the holder allow formation of a solid sample that is suitable for imaging. For example, the solid samples can be in the shape of a block or other form that is customized for imaging by fluorescent microscopy. Alternatively, in certain embodiments, the pre-gelling step can be carried out in a combination tube-sample holder, therefore allowing solidification (e.g., gelling) to occur in the same tube, eliminating the need for subsequent transfer of the liquid solution to a separate sample holder.

Following solidification, the sample can be processed by additional steps prior to imaging. For example, the sample can be equilibrated in a refractive index material so that its appropriately matched (e.g., cleared) for imaging in step 3 (RI-matching). Alternatively, in certain embodiments, the RI-matching material is added at the same time as the solidifying agent. In still further embodiments, RI-matching material is added with the solidifying agent, and then a second round of RI-matching material is added to the solidified sample to provide a final, desired transparency of the sample.

RI-matching materials are known in the art and can be employed in an appropriate amount that provides for the desired transparency of the solidified gels sample. In certain embodiments, the RI-matching material has a RI of from about 1.39 to about 1.65, or from about 1.49 to about 1.55 (e.g., about 1.52) For example, and not limitation, the RI-matching material can be those obtained from Table 3, Neuropathology and Applied Neurobiology, November 2015, "Bringing CLARITY to the human brain: Visualization of Lewy pathology in three dimensions," Liu et al., available at < https://www.researchgate.net/figure/Comparison-of-different-refractive-index-matching-solutions-Abbreviations-BABB_tbl3_283493188>.

### Step 3 - Sample Mounting & Imaging

This step entails, in exemplary embodiments, mounting the sample on an image holder and imaging the solid sample by an appropriate imaging means, such as fluorescent microscopy.

In embodiments, the methods can include, prior to imaging, mounting the sample on an image holder, such as a 3D printed sample holder as shown in FIG. 1, and imaging the sample, for example, in a water chamber or RI-matching solution. The sample holder can be customized in accordance with the particular sample preparation. In embodiments, it may comprise a base and two side-walls. In embodiments, such as that use for a sample prepared in a viscous medium, the holder may have four wall that surround and preserve the spatial configuration of the dispersed components in the sample. In embodiments, imaging can be carried out in a sample cuvette with a standard epi-fluorescence microscope. The 3D gel sample can be mounted on the sample holder with the assistance of a mounting gel (e.g., agarose, poly-L-lysine, superglue). See, e.g., Asano et al., Expansion Microscopy: Protocols for Imaging Proteins and RNA in Cells and Tissue, Current Protocols in cell biology (2018), particularly pages 34-36 - "Sample mounting".

Fluorescence microscopy approaches include, but are not limited to, conventional confocal microscopy, resonance scanning confocal microscopy, spinning-disk microscopy, and lightsheet microscopy as depicted in FIG. 1. In specific embodiments, a gel sample is rapidly imaged by lightsheet microscopy, such as Light-Sheet Fluorescence Microscopy (LSFM) using a detection lens and an illumination lens, as shown in FIG. 1. In certain embodiments, Gaussian beams can be used, or alternatively specialized Beam profiles such as non-diffracting Bessel beam can find use, as depicted in FIG. 1. Such imaging allows materials in the 3D sample block to be scanned and evaluated for the discrete presence of a labeled biomarker. As is known in the art, a processor can be in communication with the microscope to receive output therefrom and combine the sequentially imaged adjacent object areas (i.e., "stitching"). See, e.g., the techniques and apparatus disclosed in U.S. Patent Nos. 10,746,981, 10,876,870 and U.S. Published Patent Application No 2016/0041099 and International Published Patent Application No. WO 2017/031249, which may find use in accordance with the presently disclosed subject matter.

Other detection light sources and corresponding microscopy applications can also be used. For example, light microscopy can be used to examine visible dye-stained cells, such as those stained with H&E (Hematoxylin and eosin) or by immunohistochemistry (IHC). In addition, X-ray microscopy can be used to detect liquid components that have been labeled with appropriate metal tags.

Other imaging techniques can find use, including images acquired by high resolution cameras that are included in commercially-available smartphones (e.g., iPhone^{®} or Android^{®}-based smartphones) or related light-detection systems.

### Step 4 - Visualization and Analysis

The instant methods can also be used to evaluate, diagnose, or monitor a disease. For example, a liquid biopsy (e.g., whole blood, processed as described above) can be microscopically analyzed to detect the existence of a rare cell therein. For example, the instantly disclosed methods can be detected, for example, colorectal adenocarcinoma cells, leukemia cells, the type of cancer, the extent to which cancer has developed, whether the cancer will be responsive to therapeutic intervention, etc.

In embodiments, the disclosed methods can be used to detect cellular biomarkers associated with other disease and disorders, such as inflammatory, metabolic, gastrointestinal, endocrine, immunological, musculoskeletal, cardiovascular, cardiopulmonary, genitourinary, hepatological, respiratory, viral, and neurological diseases and disorders, in accordance with embodiments of the disclosure.

In addition to detecting the presence of biomarkers, such as certain cells or extracellular components (e.g., circulating tumor-derived factors, secreted proteins, released vesicles and exosomes, and cell-free nucleic acids and other biomarkers), the instantly disclosed methods can be used to ascertain cell-cell interactions, cell volumes, nucleus-to-cytoplasm ratios and other phenomenon. In embodiments, imaging can be used to analyze cell morphology and structure, including analysis of the change in cell morphology and structure as compared to their native or healthy state. For example, the imaging methods can be used to analyze the outward appearance of cells, such as their size, shape, or other external characteristics. In addition, the imaging methods can be used to analyze the form and structure of inner cell components, such as the nucleus, endoplasm reticulum, golgi apparatus, mitochondria, or other organelles.

As another example, a biopsy may be prepared by liquid dispersal of a sample of a diseased tissue, such from kidney, heart, stomach, liver, pancreas, intestines, brain, etc., to determine the condition of the tissue, the extent to which the disease has developed, the likelihood that tissue will be successful, etc. The methods herein, through the use of dyes targeting membrane or cellular components for example, can be used here to assess morphological changes in cell population that may be indicative of a disease state.

The methods can also be used in other applications. In one application, a liquid biological sample can be used to screen candidate therapeutic agents for their effect on a tissue or disease. For example, a liquid sample obtained from subject, such a mouse, rat, dog, primate, human, etc., that has been contacted with a candidate agent can be prepared by the methods disclosed herein and microscopically analyzed for one or more cellular or tissue parameters, i.e., attributes or characteristics of subcellular components that can be measured.

In another application, the methods can also be used to visualize the distribution of genetically encoded markers in a liquid sample prepared by dispersing materials from a tissue. Such markers may include, for example, chromosomal abnormalities (inversions, duplications, translocations), loss of genetic heterozygosity, the presence of genetic markers indicating a predisposition towards a disease state or healthy state. Such detection may be useful, for example, in diagnosing and monitoring disease, such as in personalized medicine, studying paternity, or other applications.

### CTC Detection

In certain exemplary embodiments, the methods disclosed herein are used to detect CTCs by immunological or molecular means for diagnostic purposes and to address their clinical significance. CTCs are rare cells that circulate in the blood or other fluids along with millions of other circulating cells. The present methods capture such rare cells in a solidified 3D form of a complex liquid sample or liquid biopsy. When the sample is subsequently imaged, for example by lightsheet fluorescent microscopy, any CTCs can be detected as discrete signals in the sample block. Advantageously, the methods allow such CTC detection without reducing their biological heterogeneity. They also can include fewer interventions than those required for processing by microfluidics or traditional cytology that may disrupt morphology or impede sensitivity.

### EXAMPLES

The present disclosure will be further illustrated by the following non-limiting Examples. These Examples are understood to be exemplary only, and they are not to be construed as limiting the scope of the one or more embodiments, and as defined by the appended claims.

### Example 1 - Matrix-Assisted Detection of CTCs in a Patient Blood Sample

### Background

CTCs are rare cells that circulate in the blood or other fluids along with millions of other circulating cells that belong, for example, in the hematopoietic compartment, and do not adhere spontaneously. These poor adhesive properties hinder existing methods in the art for detecting CTCs, such as the use of a solid support to isolate and immobilize CTCs. The presently disclosed methods allow such rare cells, if present, to be detecting in a complex 3D representation of a liquid sample, without limiting their biological heterogeneity and reducing interventions that could disrupt morphology. Moreover, methods based on modified supports and matrices coated with anti-adhesion molecules (or other binding proteins) may elicit biological responses that alter CTC morphology, leading to inaccurate analyses. Immuno-immobilization relies upon strong affinity between coated antibodies and cell membrane proteins. Low expression of target surface protein or low antibody affinity can lead to low capturing rate of target cells. Similarly, cytocentrifugation of cells to a support such as a microscope slide, followed by fixation and subsequent labeling, can rupture cells or disrupt their morphology, hindering diagnostic assessment. In contrast, a microscope slide approach requires cells to be coated in a single layer manner to allow imaging, which greatly reduce the throughput, or number of cells, being imaged and analyzed.

Detection methods relying on microfluidics, nanostructures, and channels can suffer from similar limitations. *See, e.g.,* WO2012016136; WO2013049636 Such methods can induce flow stress on cellular components in the liquid sample, compromising their morphology and other characteristics. More generally, such methods typically select a homogeneous population of cells based on size or expression of superficial membrane proteins, limiting the biological heterogeneity that is otherwise amenable to diagnostics analysis of a clinical or biological sample.

It is therefore desirable to identify biopsy methods that can minimize lengthy manipulations, interaction external stimuli, and prolonged treatments. Such improvements may help improve both the natural state and heterogeneity of cells, and other components, in a liquid biopsy, thereby providing more accurate tools for diagnostic applications, such as the early diagnosis of possible metastatic processes.

CTCs in peripheral blood can be viewed as an extension of a tumor. A tumor is typically heterogeneous, meaning that through mutations, a tumor can develop several different cell types within. Each cell type can have its own characteristics, which can range from mild to aggressive. CTCs are rare cancer cells released from tumors into the bloodstream that are thought to have a key role in cancer metastasis. See, e.g., Harouaka et al., 2014, Pharmacol. Ther. 141, 209-221.

In U.S. Published Patent Application No. 2019/0113423, hereby incorporated by reference, it is described how molecular characteristics, such as membrane protein or DNA/RNA information, in a tumor can be indicators of therapy outcome. This reference involves fixing or embedding a sample, such as a solid tissue or solid cell pellet, in a solution of hydrogel monomers, cross-liking the monomers, clearing the cross-linked sample, staining the cleared sample with one or more detectable markers, and imaging the stained sample using COLM or like imaging process.

In contrast, the present disclosure provides, in certain embodiments, a method of analyzing individual cells (e.g., from a liquid biological sample) that have been dispersed and captured in a three-dimension solidified sample. No enrichment or selection of the cells is required, and all cells can be labeled and visually screened by imaging the sample.

There is also, in certain embodiments, no general need for delipidation (e.g., SDS-based delipidation) or other sample clearing methods, and certain embodiments of the presently disclosed method are defined by not including such a delipidation or other sample clearing step. See, e.g., Jensen and Berg, 2017, J. Chem. Neuroanat. 86, 19-34. Thus, more cellular information is preserved, as compared to, for example, U.S. Published Patent Application No. 2019/0113423 and methods involving the CLARITY or other clearing protocols. According to the subject disclosure, each individual cell or cell cluster can be visualized and analyzed separate from each other in a three-dimensional array, which in turn can provide comprehensive cell information such as cell size, morphology, biomarker distribution, nuclear-cytoplasm ratio, and more.

Multiple types of tumors can be identified according to the subject disclosure, such as lung, liver, and colon cancers, as well as other cancers that can be detected as CTCs in a liquid biopsy. For example, upon detection of CTCs from a liquid biopsy (e.g., from a blood sample) with an EpCAM marker, the information obtained can indicate whether or not the patient has cancer (or other attributes regarding risk, prognosis, and therapeutic response) by providing information, such as the number (or type) of cancer cells in, for example, 1 cc, 2 cc, 3 cc, 4 cc, or more of blood. EpCAM is an epithelial marker indicative of invasive cancer cells that went through epithelial mesenchymal transition (EMT), which is a main cause for cancer invasion. Cancer invasion usually begins with EMT from a small population of tumor cells that will stimulate blood vessel growth, providing passage for the cells to invade the bloodstream as CTCs.

There may be several different cancer cells from different tissues present in the bloodstream, and one can use different biomarkers in order to identify them. For example, one can identify CTCs with multiple cancer markers together, such as, but not limited to, HER2 (breast), CDX2 (colon), CK20 (colorectal, transitional cell carcinomas and Merkel cell carcinoma), CK19 (breast), PD/PDL-1 (several cancers, including NSCLC, melanoma and renal cell) and EGFR (lung) according to the subject disclosure. Identification of the different CTC cell subtypes within the blood sample can provide information about the origin of the cancer. In turn, this information can guide more-detailed follow-up studies, such as high-resolution analysis by MRI to identify the location of lesions and tissue biopsy for pathological examination.

Cell heterogeneity in blood can also be applied to healthy cells such as leukocytes. According to the present disclosure, one can tell the difference between CTC and leukocytes by applying parameters such as cell morphology (for example, the nuclei of CTCs can be bigger than that of leukocytes) and molecular markers (e.g., EpCAM- CTC+/WBC- & CD45 CTC-/WBC+).)

Additionally, because CTCs have escaped from a primary tumor into the bloodstream, they are generally highly invasive. Such invasive cells can make cancer difficult to treat and cure due to their ability to metastasize, as well as their greater likelihood of mutations, which may increase the chance of resistance to chemotherapy and other therapeutic interventions. This underscore the importance and value in identifying the molecular characteristics of such invasive cells to determine the proper treatment plan. For example, if the CTC present in blood shows high levels of PDL-1, immunotherapy will likely be a more effective approach. PDL-1 levels can be determined, for example, with a PDL-1 antibody probe to quantify the number of PDL-1+ CTCs over all CTCs in a sample. Because tumor development is almost always heterogeneous, meaning one tumor site does not represent all tumor populations, and because CTCs can originate from all tumor sites, this measurement can help predict the effectiveness of, for example, PD-1/PDL-1 inhibitory treatment. (https://www.ncbi.nlm.nih.gov/pmc/articles/PMC6627043/) Since CTCs are rare in blood, such predictive measurements will be most accurate if CTCs are efficiently captured and analyzed, as provided by the instantly disclosed methods.

Another example according to the subject disclosure involves determination of CTC number and cell types and administering therapy based on this determination (e.g., deciding whether to continue a present course of treatment or to institute a different or additional course of treatment). For cancer patients under chemo or cell therapy, the CTC number can indicate the treatment effectiveness. For stage III colon cancer patient, CTC number in 1cc of blood may range from to tens of thousands for advanced cases to several hundred for less advanced cases. After 3 months of chemotherapy or other therapeutic intervention in some advanced stage III cases, the CTC number can drop to 5 thousand or even close to zero after 12 months. However, in some cases, the CTC number, might only decrease to about 2 thousand after 6 months of chemo and climb back to tens of thousands 6 months later. This indicates drug resistance of cancer cells to the therapeutic intervention. Chemotherapy, for example, may have killed all the drug sensitive CTCs, but other subtypes that were resistant will not be affected.

By performing a blood test for CTC detection and identification, according to the subject disclosure, on a regular basis (e.g., weekly or monthly) doctors and medical professionals can quickly verify the resistance of tumor to chemo and modify treatment plan accordingly. Accordingly, the investigations here address the above-described limitations by describing formulations and methods to visualize a biopsy sample in three dimensions by capturing the dispersed components in the sample in a solidified state. This approach has numerous advantages, such as increasing the sensitivity of the analysis by separating the individual components, increasing the speed of the analysis by allowing the use of rapid imaging techniques, such as light sheet fluorescent microscopy, and enhancing the specificity of the analysis by reducing the number of processing steps that might otherwise disrupt the morphology and integrity of sample components, such as cellular markers.

### Materials and Methods

### Sample Collection and Fixation:

A blood sample (e.g., 2 cc, 8 cc or 10 cc) is collected from a subject and the red blood cells removed by density gradient centrifugation using standard methods, such as, for example, centrifugation at 1000 rpm for five minutes at room temperature. See, e.g., Farahinia et al. 2020, Circulating Tumor Cell Separation of Blood Cells and Sorting in novel Microfluidic approaches: a review. 10.20944/preprints202010.0622.v1; and Lowes et al. 2014, Circulating tumor cells as a real-time liquid biopsy: isolation and detection systems, molecular characterization, and clinical applications; in Pathobiology of human disease: a dynamic encyclopedia of disease mechanisms (eds, McManus and Mitchell*).*

The supernatant is removed, transferred to a separate tube, and is recentrifuged to collect the remaining cells, including any CTCs, and other biological components. The pellet is optionally re-suspended in a fixative solution, such as a 4% paraformaldehyde solution, shaken for several minutes, centrifuged, washed in phosphate buffered saline (PBS), and centrifuged again. The pellet is re-suspended in a blocking buffer and shaken for a couple of minutes, and centrifuged again.

### Biomarker Labeling:

The fixed and washed pellet is resuspended in blocking & permeabilizing buffer, placed on a shaker for several minutes, centrifuged, and resuspended in premixed labeling solution for 30 to 60 minutes. Depending on the binding affinity of the antibodies, which can directly affect the final imaging quality, the pellet can be resuspended and incubated in labeling mixture for longer times as needed (e.g., up to 10 or 20 hours).

Protein biomarkers of interest can be labeled with antibodies (or related fragments or derivatives) that are detected directly, e.g., with a fluorescent conjugated antibody, or indirectly, e.g., with immunohistochemistry or primary antibodies and conjugated secondary antibodies. Likewise nucleic acids of interest can be labeled with molecular probes that are detected directly or indirectly. If desired, the signal can be further amplified by available technologies, such as systems based on biotin-streptavidin binding and the polymerase chain reaction. Optionally, the sample can be centrifuged, and the pellet washed one or more times.

In this Example, a labeling solution of 200 µL of a PBST blocking buffer is mixed with propidium iodide (PI) (1:2000) for nuclear staining, EpCAM antibody (1:250 for antibody concentration greater than 0.1mg/ml) for cancer cell detection, CD45 antibody (1:250 antibody concentration) for immune cell detection, and secondary antibodies matching primary antibody hosts (2 times weight to primary), using Fab from Jackson ImmunoResearch Laboratories, Inc. (https://www.jacksonimmuno.com/catalog/31).

Alternatively, sequential labeling can be performed, starting with primary antibody incubation for 60 minutes or more and a wash, then secondary antibody and wash, and then staining with PI in PBS solution for 5 minutes, followed by a wash. For other targets, one can either label surface protein with antibody or can label DNA/RNA target with a probe. Sequential labeling with a secondary antibody or direct conjugate of a fluorescence molecule can also be employed. A biotinylated antibody can also be used with a boosted signal based on binding affinity to, for example, streptavidin, as known in the art. After addition of the labeling antibody or any probes or chemical dyes, the pellet can optionally be re-suspended in 4% PFA for 10 minutes at room temperature to fix all the labelling materials on the cells so they do not get washed away during the solidification step.

### Solidification:

Following the labeling reaction, the sample is optionally washed one or more times, and then resuspended in a solution containing a hydrogel precursor that can be polymerized upon addition of sufficient amounts of a crosslinker and an ion-containing component (e.g., a component containing Ca²⁺ ion) to induce gelation. For example, the amount of cross-linker that is introduced can be adjusted depending on whether a gel-type solid is desired, or increased to provide a higher density solidified sample.

In this Example, the gel solution containing the dispersed materials is transferred to a desired imaging holder at 25-37°C , such as a holder comprising sample wells having a block shape (or other desired shape), and the holder may be shaken or vibrated to ensure dispersal of materials in each well. The holder containing the sample solutions is transferred to a lower temperature that allows gelling in the wells to occur, for example by incubating a sample dispersed in LMP agarose at 4°C for about 15-30 minutes.

It is noted that the original liquid blood sample will have millions of non-cancerous cells that will obscure CTCs, which are rare and present at extremely low levels. Gelling allows one to disperse and separate the cells in 3D space for imaging (described below). One crucial point is that millions of cells are condensed from high volume (e.g., 10 cc of blood) to 20µl of gel block (2.71 mm³), which then is allowed to be imaged in an acceptable imaging time. In alternative embodiments, the volume can be decreased even more to allow quick high-resolution imaging (e.g., up to 20x or 40x). In certain embodiments, the cell pellet is reduced to give the smallest volume possible. In such circumstances in which a relatively small volume is employed, the close distance between cells may require attention to gel clearing due to the high density of lipid-bilayers (cell membrane), but can be resolved, for example, with optimized RI-matching solution or a higher power laser such as a two-photon microscope.

### Imaging:

Once the gel block (with dispersed contents) has formed, it is cleared by immersion in refractive index (RI) matching solution for about 30 minutes to make it transparent for imaging. The RI-matched gel sample can then be imaged to detect the presence of on more biomarkers, which are not discretely segregated in the gel block.

Such imaging can occur by microscopy, including by efficient fluorescent imaging methods, such as by light sheet microscopy. In the case of fluorescently labeled biomarkers, for example, the sample can be rapidly imaged by Light-Sheet Fluorescence Microscopy (LSFM) using a non-diffracting Bessel beam. For example, using lightsheet microscopy allows hundreds or thousands of cells to be imaged from a single field-of-view (FOV). For example, by setting the imaging z-step to 1 micron, each cell with an average cell diameter of 15 micron, would get imaged about 10 to 15 times from top to bottom. Unlike indirect gating on a summary plot by flow cytometry, the acquired LFSM data from the imaged sample reveals individual cells that can be visually inspected for antibody labeling validity, intensity, distribution, etc.,.

Application of the methods here can allow rare biomarkers, such as CTCs to be quickly detected in a solid array, allowing spatial discrimination of labeled biomarkers. By reducing the need for processing steps that can reduce sample heterogeneity or alter their properties, the methods also provide a more sensitive and accurate diagnostic approach.

Moreover, the methods described herein allow PBMCs to be immediately fixed after RBC removal, allowing capture of their distribution and association in their original state. Advantageously, this allows direct visualization of sample characteristics such as cell-cell interactions, cell clusters (e.g., circulating tumor microemboli) and other properties that may indicate disease state or provide other prognostic or diagnostic applications.

### Example 2 - 3D Matrix-Based Imaging of Blood Sample

### Cell Preparation

Anticoagulated blood collected from a human in a EDTA coated tube was transferred to a 15 ml tube, cell separation medium (e.g., Ficoll^{®}) was added, and the mixture was subjected to density gradient centrifugation (1200 RPM) for five minutes. After centrifugation, the buffy coat (fraction containing white blood cells and platelets) was transferred to a 2 ml test tube without collecting any separation medium. The resulting mixture was again centrifuged at 500g for 5 minutes to allow the cell pellet to form to the bottom of the tube. The supernatant was carefully removed without disturbing the cell pellet.

### Labeling

The pellet was then re-suspended in 200 µl of labelling solution (1: 1000 PI in 4% PFA in PBS) to label the cell nucleus. The labelling solution was added at 4°C for 20 minutes. The mixture was then centrifuged at 500g for 5 min, the supernatant carefully collected and discarded. Then 1 ml of 4% PFA in PBS was added to fix the chemical dye at 4°C for 20 minutes, and the mixture was centrifuged again at 500 g for 5 min, and the supernatant again discarded.

### Solidification

Meanwhile, a solidifying solution mixture that includes about 0.5 wt% LM agarose was prepared. The solidifying solution was heated to above its gelling point in a microwave to melting and then allowed to cool at room temperature, where it is be provided in a liquid state until it again reaches its gelling point. With a pipet, 20 µl of cooled solidifying solution was slowly added to the pellet to re-suspend the pellet, the solidifying solution being added slowly to avoid bubble formation. The mixture is brought to 4°C and maintained for a period of time to allow gel formation (less than about 30 minutes).

### Mounting & RI-Matching

Once the sample was gelled, the gel was carefully removed from the tube with a pipet by poking the side of the gel, to provide a 20 µl volume gel. The gel was then mounted onto a sample holder at room temperature, in this case a 3D gel rod 2 mm in diameter (same composition as the solidifying solution pre-made into a holding shape mounted to a 3D-printed plastic surface), and cooled at 4°C for 10 minutes to allow it to gel. The sample gel on the holder was immersed in RI-matching solution for 5-30 min to prepare it for imaging.

### Imaging

The sample was transferred to a lightsheet imaging chamber and imaged (10X objective). For a 20 µl gel sample, it took roughly 3 min to image single channel at 10X resolution with z-step of 4 µm, in which imaging time can be reduced by decreasing gel volume (increasing cell density), reducing imaging resolution (lower magnification objective or higher z-step), or by optimizing microscope settings such as z-steps, and other means known those of ordinary skill in the art.

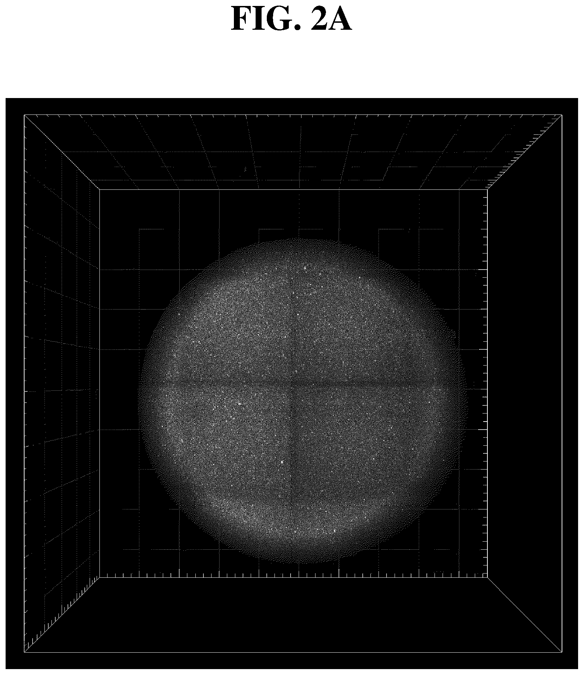

FIGS. 2A-2C depict images obtained from the lightsheet imaging chamber.

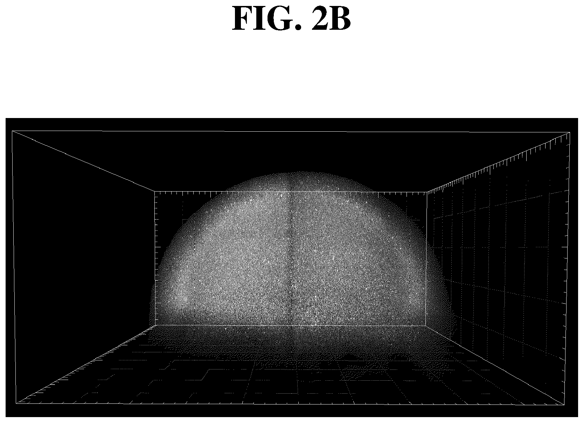

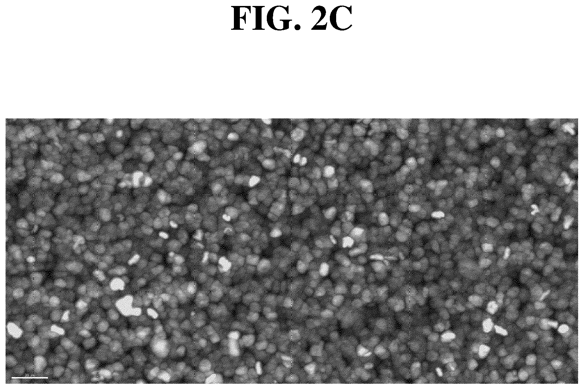

The nuclei of the stained leukocytes are shown in bluish-green. In FIG. 2A, the image represents the entire 20 µl gel sample from the top-down view. FIG. 2A is a 100 µm stacked and reduced image of 25 x 4 µm images. In FIG. 2B, the image represents the entire 20 µl gel sample from the side view. In FIG. 2C the image is magnified to capture the individual leukocytes in closer detail, in which the small horizontal line in the lower-left hand corner equals 20 µm in scale.

### Example 3 - Cell Compatibility

Cells from a CACO2 cell line obtained from ATCC; and cells from a HL60 cell line also obtained from ATCC were harvested and processed as briefly described below. CACO2 cells were cultured and collected through trypsinization. HL60 is a floating cell line that does not require trypsinization. CACO2 and HL60 cells were each collected, washed with PBS, and centrifuged to collect the cell pellet.

### Immunolabelling - Cancer Cell Line CACO2

The CACO2 cells were stained with Trypan Blue and counted using a cell counter. An appropriate number of cells was resuspended in 100 *µl* PBS. EpCAM(Dako) antibody was added to the cell solution at 1: 100 ratio and secondary antibody was added at 1:2 primary to secondary antibody molar ratio.

The mixture was shaken at room temperature for 30 minutes. The mixture was centrifuged at 500g for 5 min, and the supernatant carefully removed. The cell pellet was washed by resuspension in PBS, and centrifuged again at 500 g for 5 min, and the supernatant was discarded. The cells were then resuspended and incubated at 4°C for 20 minutes in 1 ml of PI solution in 4% PFA (1:1000) to fix the bound antibody and label the cell nucleus, the mixture was centrifuged again at 500 g for 5 min, and the supernatant was discarded.

### Immunolabelling - Leukocyte Cell Line HL60

The HL60 cells were stained with Trypan Blue and counted using a cell counter. An appropriate number of cells was collected in 100 *µl* PBS. CD45 (Dako) antibody was added to the cell solution at 1:100 ratio and secondary antibody was added at 1:2 primary to secondary antibody molar ratio.

The mixture was shaken at room temperature for 30 minutes. The mixture was centrifuged at 500g for 5 min, the supernatant carefully removed, and 1 ml of PBS was added to wash, and the mixture was centrifuged again at 500 g for 5 min, and the supernatant again carefully collected and discarded. The cells were then resuspended and incubated at 4°C for 20 minutes in 1 ml of PI solution in 4% PFA(1:1000) to fix the bound antibody and label the cell nucleus at 4°C for 20 minutes, and the mixture was centrifuged again at 500g for 5 min, and the supernatant again carefully collected and discarded.

### (Reference) Solidification

Meanwhile, a solidifying solution that contains about 1 wt% LM agarose was prepared. The solidifying solution was heated in a microwave to melting and then allowed to cool to room temperature, where it will eventually be provided in a gel state. With a pipet, 20 µl of cooled solidifying solution was slowly added to the pellet to re-suspend the pellet, the solidifying solution being added slowly to avoid bubble formation. The mixture is brought to 4°C and maintained for a period of time to allow gel formation (less than about 20 minutes).

### Imaging

Both gels with immunolabeled CACO2 and HL60 cells were imaged with lightsheet microscope with 10X objective as described earlier.

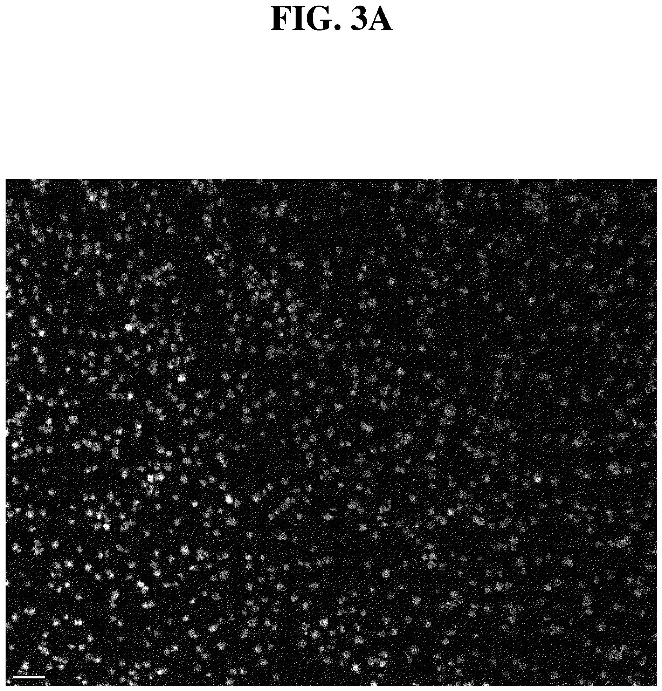

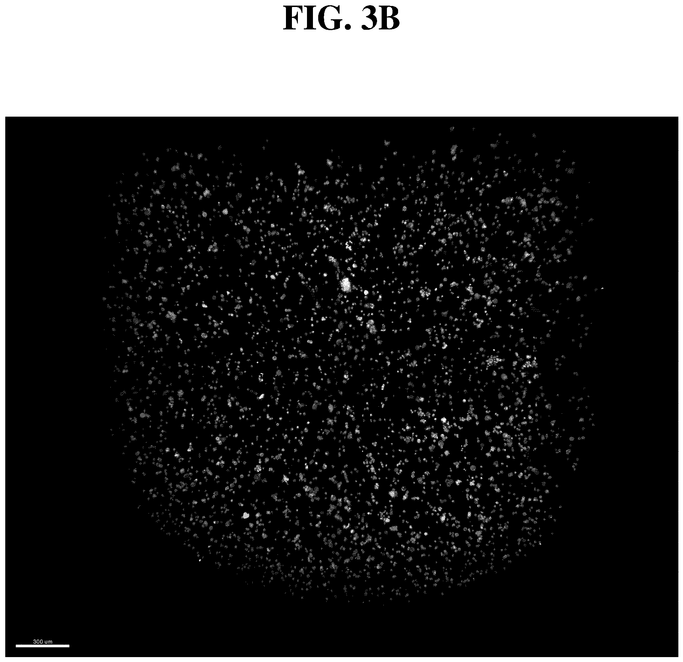

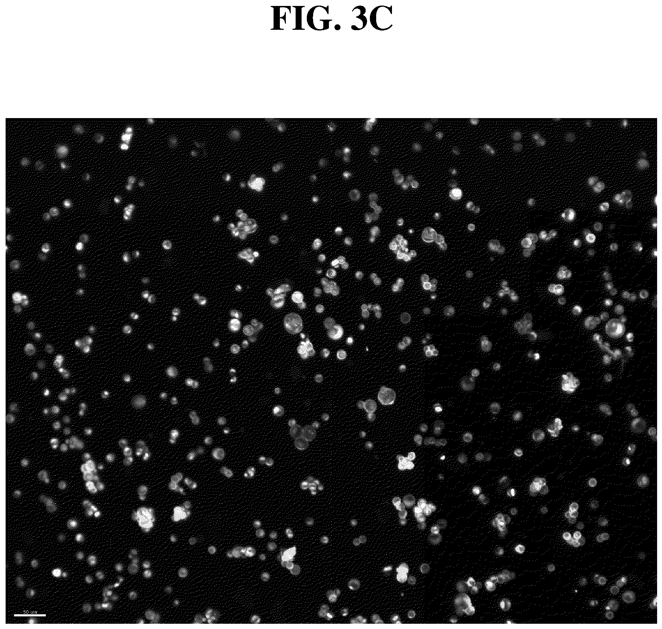

FIG. 3A depict CD45/PI-stained HL60 cells, as captured by light sheet microscopy. FIG. 3A is digitally enlarged as indicated by the scale bar in the lower left-hand corner, in which the white bar corresponds to 50 µm. The yellow is indicative of PI staining labelling the nucleus and the green is indicative of CD45 immunolabelling. FIGS. 3B-3C depict EpCAM/PI-stained CACO2 cells, as captured by light sheet microscopy. Images were taken with a 10x objective. FIG. 3B is the presentation of the entire gel volume. FIG. 3C is digitally enlarged as indicated by the scale bar. That is, in FIG. 3B the scale bar represents 300 µm and in FIG. 3C the scale bar represents 50 µm.

### Example 4 - Multiplex Labeling of CACO2 cells in Blood Sample

### Cancer Cell Spiking In Blood Sample

### Cancer Cell Count

A study was performed to simulate CTC detection in cancer patients. The study is designed to assess the rare cell detection efficiency of 3D liquid biopsy method and the cell loss percentage from the cell preparation process.

### Cell Preparation

A sample of CACO2 cells was trypsinized, counted, and seeded at appropriate volume in freshly collected peripheral blood sample to make a cancer cell spiked blood sample. Peripheral blood mononuclear cells (PBMC) were collected through red blood cell lysis approach. Anticoagulated blood collected from a human in a EDTA coated tube was transferred to a 15 ml tube. For 1 c.c. of blood, 8 c.c. of ammonia chloride solution was added to lyse the red blood cells. The lysing process was performed on ice for 15 minutes, centrifuged, supernatant removed, and the collected PBMC cell pellet including spiked cancer cells was resuspended in 100 µL PBS awaiting further process.

EpCAM(Dako) and CD45(Dako) antibodies was added to the cell solution at 1:100 and matching secondary antibody was added at 1:2 primary to secondary antibodies molar ratio to achieve a one-step labeling process. Cell sample was incubated at room temperature for 1 hour to allow antibody binding. Next, the sample was centrifuged at 500g for 5 minutes to collect the pellet. The pellet was washed with 1ml PBS and centrifuged again and supernatant was removed. Next, 4% PFA with 1:1000 PI was added to the pellet to fixed the labeled antibody and stain the nucleus for 30 minutes. Next, the cells were centrifuged again to collect the pellet.

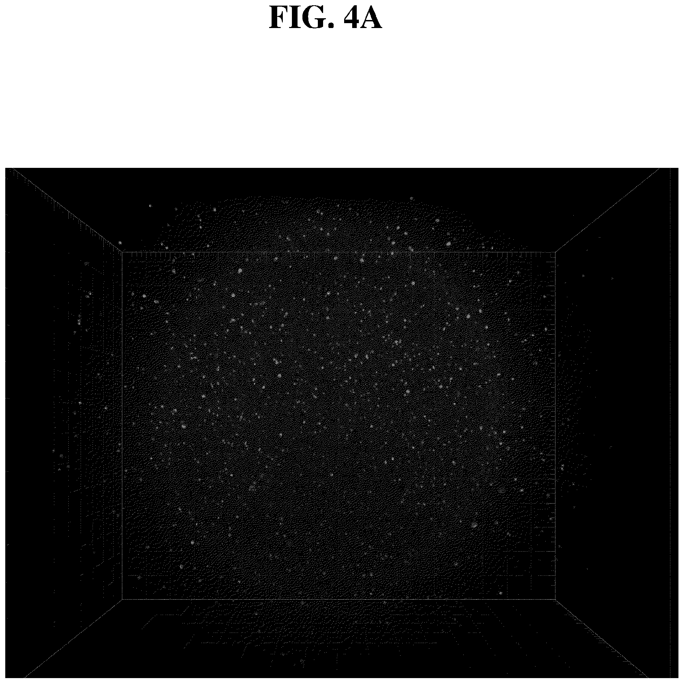

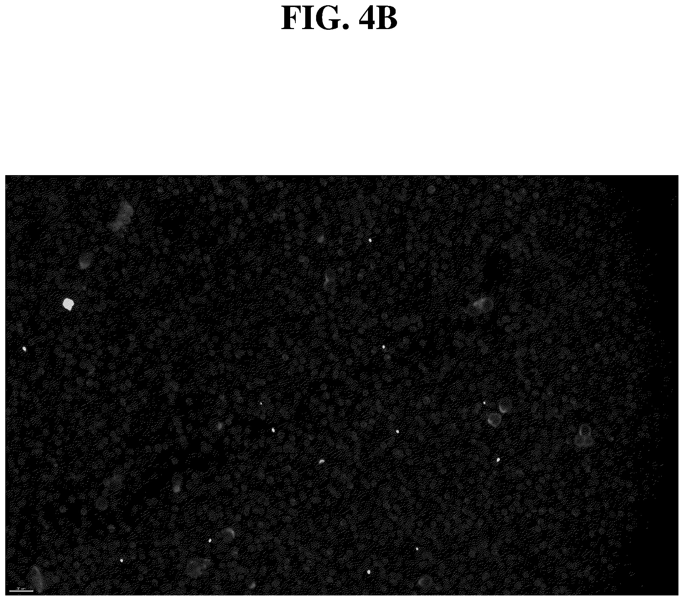

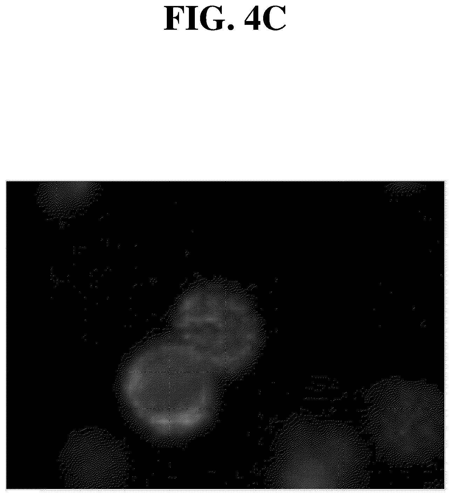

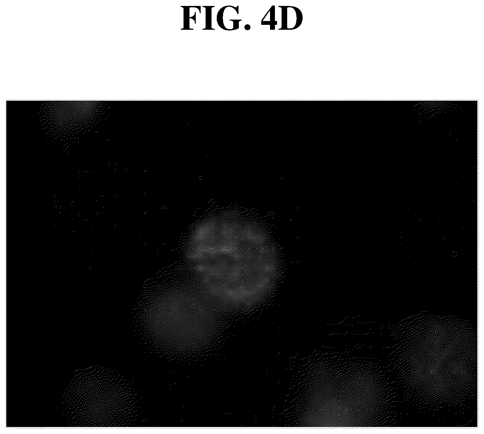

Cell pellet was mixed in solidifying solution as described earlier. The mixed PBMC and CACO2 cells were then identified in the sample, to confirm the ability to detect multiple cell types with multiple antibody target labeling in a sample. FIG. 4A depicts the entire 3D gel data of multiplex labeling of CACO2 in PBMC, in which the EpCAM marker is shown in magenta and the PI is shown in blue. FIG. 4B depicts a zoomed-in, stacked image of CACO2-EpCAM (magenta), leukocyte-CD45 (green) and PI (blue). FIGS. 4C and 4D depict images of identified CTC with and without EpCAM (magenta signal) for confirmation.

In these Figures, stacked or separated, it is confirmed that in 3D representation, EpCAM labeling for cancer cell detection is a viable approach. CACO2 shows high EpCAM expression with no CD45 expression and PBMC(leukocytes) show variable CD45 expression but no EpCAM expression.

### Cell Counting

Trypsinized CACO2 were counted and seeded to 2 c.c. of blood, stained, and labeled as set forth in the Table below to prepare three sets of gels (a, b, and c):

| Blood Volume | Spiked Cell Line | Cell Number | Probes |
|---|---|---|---|
| 2 c.c. | CACO2 | 2000 | PI, EpCAM, CD45 |

A 3-dimension gel was formed and imaged via light sheet microscopy as described in Example 1, 2, and 3. Each image was denoised and featured-enhanced for all immunolabeled signals for cell detection. Cells with positive EpCAM and PI signal, and negative CD45, were counted as positive; cells with negative EpCAM signal and positive PI signal were counted as negative; and signal with negative PI signal were counted as null. Other parameters such as cell or nucleus circularity, cell/nucleus volume, and nucleus-cytoplasm ratio (N:C ratio) can be quantified for positive cancer cells with use of MATLAB-based or Python-based cell detection algorithm.

FIG. 4A depicts output from the 3d images of the three repeat sets of gel sample with 2000 spiked CACO2 cells.

To better visualize detected results, the 3D imaging data were shown in max projection manner that all 2D images were stacked on top of each other to generate a single plane imaging data. EpCAM(color) labelled CACO2 cells can be easily spotted visually by digitally zooming in onto the dataset. EpCAM positive cells are screened for negative CD45 signal and positive PI signal. The cell detection algorithm screens all cells with those parameters and output identified CTC images with separated and combined signals as shown in FIG. 4B. These images will be stored in a single file per sample, and all the detected cell images will be further confirmed by human eye or a signal detection algorithm.

The Table below depicts the final cell count from the three sets of gels with a, b, and c. The detected results were within a reasonable approximation of the seed cell counts.

| Sample ID | Spiked Cell Number | Cell Detected |
|---|---|---|
| a | 2000 | 1987 |
| b | 2000 | 2058 |
| c | 2000 | 2011 |

Total cell number in whole gel can be quantified with total PI positive signal. Dividing total positive cancer cell number with total PI signal number will output a ratio. Multiply the ratio with one million gives number of cancer cells in one million of PBMC.

### Example 5 - CTC Detection in Cancer Patient

An IRB study was performed to detect CTC presence in colon cancer patients' blood. The study is designed to assess the rare cell detection efficiency of 3D liquid biopsy method. Enrolled patients included healthy and disease subjects. In the following example, the patients with stage II to stage IV colon cancer that has metastasis to liver or lung are shown.

### Blood Sample Preparation

Anticoagulated blood collected from a human in a EDTA coated tube was transferred to a 15 ml tube. Peripheral blood mononuclear cells (PBMC) were collected through red blood cell lysis approach. For 2 c.c. of blood, 16 c.c. of ammonia chloride solution was added to lyse the red blood cells. The lysing process was performed on ice for 15 minutes, centrifuged, supernatant removed, and the collected PBMC cell pellet including spiked cancer cells was resuspended in 100 µL PBS awaiting further process.

### Patient A

EpCAM(Dako) and CD45(Dako) antibodies were added to the cell solution at 1:100 and matching secondary antibody was added at 1:2 primary to secondary antibodies molar ratio to achieve a one-step labeling process. Cell sample was incubated at room temperature for 1 hour to allow antibody binding. Next, the sample was centrifuged at 500g for 5 minutes to collect the pellet. The pellet was washed with 1ml PBS and centrifuged again, and supernatant was removed. Next, 4% PFA with 1: 1000 PI was added to the pellet to fix the labeled antibody and stain the nucleus for 30 minutes. Next, the cells were centrifuged again to collect the pellet.

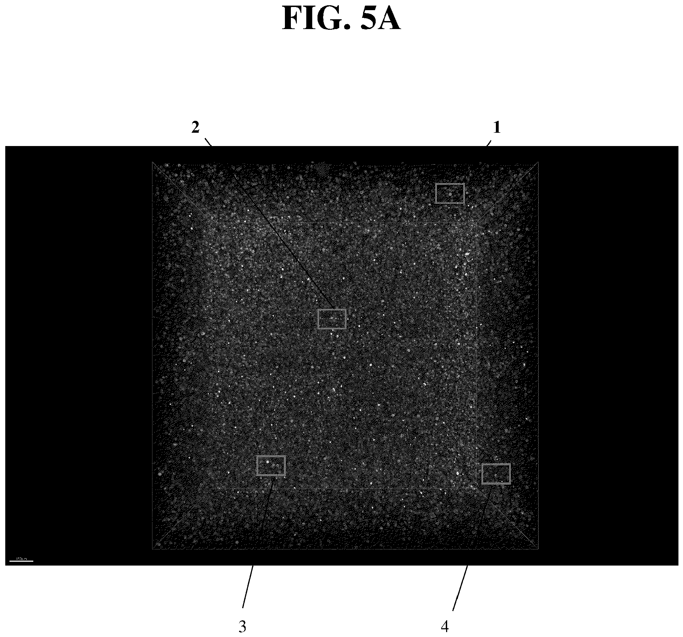

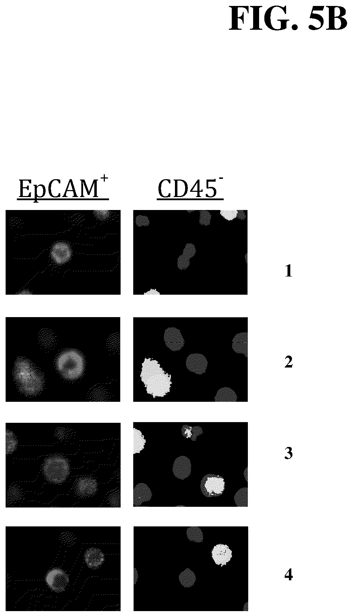

Cell pellet was mixed in solidifying solution (1% LM agarose) and imaged as described above. FIG. 5A depicts a 3D gel data (single stack block) with resolution of 0.42µm x 0.42µm x 1 µm, in which the EpCAM marker is shown in magenta, CD45 marker is shown in green, and the PI is shown in blue. FIG. 5B depicts zoomed-in image of EpCAM-positive, CD45-negative, and PI-positive cell targets. Using the above parameter to screen for positive CTCs, we were able to detect 195 CTCs in approximately 160,000 PBMC, which is the equivalent of 1,218 CTC per million of PBMC.

### Patient B

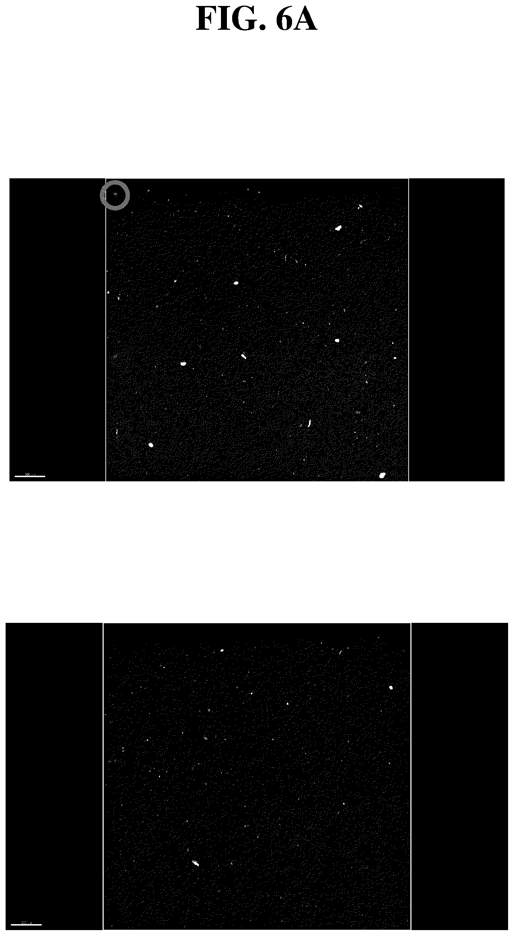

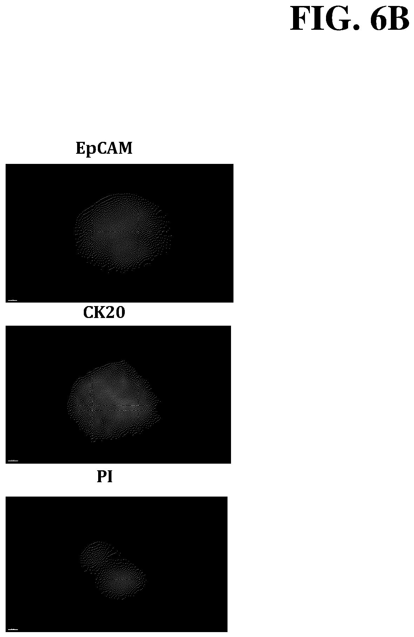

CK20(Ventana) and EpCAM(Dako) antibodies was added to the cell solution at 1:100 and matching secondary antibody was added at 1:2 primary to secondary antibodies molar ratio to achieve a one-step labeling process. Labeled cell pellet collection, gelling, and imaging, were performed as described above for Patient A. FIG. 6A depict 2 continuous stacks of 3D gel data (600µm stack from 1200µm stack) with resolution of 0.42µm x 0.42µm x 1µm, in which the CK20 marker is shown in yellow, EpCAM marker is shown in magenta, and the PI is shown in blue. FIG. 6B depicts zoomed-in single cell image of CK20-positive, EpCAM-positive, and PI-positive cell targets. Using the above parameter to screen for positive CTCs, we were able to detect 12 CTCs in approximately 46,200 PBMC, which is the equivalent of 259 CTC per million of PBMC.

In contrast to other methods of looking at cells in a complex sample, such as a tissue sample, the methods here do not require clearing steps that remove lipids or disrupt other cellular information to achieve tissue transparency for 3D imaging. Instead, methods here combine gelling the dispersed cell sample in three-dimensional space and refractive index matching to achieve complete cell sorting and 3D visualization of complete cellular information within the liquid sample.

Furthermore, while certain details in the present disclosure are provided to convey a thorough understanding of the invention as defined by the appended claims, it will be apparent to those skilled in the art that certain embodiments may be practiced without these details. Moreover, in certain instances, well-known methods, procedures, or other specific details have not been described to avoid unnecessarily obscuring aspects of the invention defined by the appended claims.

## Claims

1. A matrix-assisted method of analyzing a liquid sample that includes biological materials for one or more target components, comprising:
(a) adding a solidifying agent to a specimen obtained from the liquid sample that includes the biological materials;
(b) generating a solidified sample comprising dispersed biological materials to capture and immobilize the dispersed biological materials in a three-dimensional state;
(c) introducing a refractive index matching material to the solidified sample; and
(d) imaging the solidified sample to identify the one or more target components in the dispersed biological materials;
wherein the solidifying agent comprises a mixture of chemical monomers and cross linkers to create a synthetic chemical gel having a chemically cross-linked polymer network.

2. The method of claim 1, further comprising (i) labelling the specimen obtained from the liquid sample in step (a) with one or more probes for the one or more target components prior to adding the solidifying agent; and/or (ii) labelling the solidified sample from step (b) with one or more probes for the one or more target components.

3. The method of claim 2, wherein the labelling comprises contacting the specimen obtained from the liquid sample in step (a) with a molecular probe; and/or contacting the solidified sample from step (b) with a molecular probe wherein the molecular probe is an antibody, a fluorescent dye, or a nucleic acid probe.

4. The method of any one of claims 1 to 3, wherein the one or more target components includes a cellular target or an intracellular target.

5. The method of claim 1, further comprising introducing the optically cleared gelled solid sample from step (c) into a sample holder that is immersed in a solution that includes a refractive index matching material.

6. The method of claim 1, wherein the liquid sample is a liquid blood sample.

7. The method of claim 6, wherein the specimen is obtained from the liquid blood sample by a process that includes removing red blood cells and platelets from the liquid blood sample, and wherein the specimen includes peripheral blood mononuclear cells (PBMCs) isolated from the liquid blood sample.

8. The method of claim 7, further comprising:
(i) labelling the specimen comprising the isolated PBMCs obtained from the liquid blood sample with one or more probes for one or more rare circulating cells prior to adding the solidifying agent; and/or labelling the matrix-supported sample from step (b) with one or more probes for the one or more rare circulating cells; and
(ii) imaging the solidified sample from step (c) or optically cleared solidified sample from step (d) to determine the presence of the one or more probes, thereby determining the presence of rare circulating cells in the liquid blood sample.

9. The method of claim 8, wherein the labelling further comprises adding a probe for white blood cells.

10. The method of claim 8 or 9, wherein the one or more probes recognizes a cancer specific antigen or a tumor-specific DNA or RNA sequence.

11. The method of any one of claims 8 to 10, wherein the one or more probes are selected from an antibody or nucleic acid probe, and more particularly, wherein the one or more probes confers detection of one or more of EpCAM, HER2, CDX2, CK20, CK19, PD/PDL-1 and EGFR antigen or corresponding nucleic acid sequence.

12. The method of any one of claims 8 to 11, wherein the one or more rare circulating cells includes a circulating tumor cell.

13. The method of claim 8 or 9, wherein the one or more rare circulating cells includes a circulating epithelial cell or circulating endothelial cell.

14. The method of any one of the preceding claims, wherein prior to step (a), the biological specimen is subject to a fixation procedure wherein the fixation procedure comprises incubating the biological specimen in a fixative solution.

15. The method of any one of the preceding claims, wherein imaging is carried out by fluorescence microscopy, optionally, by light sheet fluorescence microscopy.

16. The method of claim 1, further comprising performing delipidation on the solidified sample.

## Patentansprüche

1. Matrix-unterstütztes Verfahren zum Analysieren einer flüssigen Probe, die biologische Materialien enthält, hinsichtlich einer oder mehrerer Zielkomponenten, welches umfasst:
(a) Zugabe eines Verfestigungsmittels zu einer aus der flüssigen Probe, die die biologischen Materialien enthält, erhaltenen Prüfprobe;
(b) Erzeugen einer verfestigten Probe, die dispergierte biologische Materialien umfasst, um die dispergierten biologischen Materialien in einem dreidimensionalen Zustand einzufangen und zu immobilisieren;
(c) Einbringen eines Brechungsindexanpassungs-Materials in die verfestigte Probe; und
(d) Bildgebung der verfestigten Probe zum Identifizieren der einen oder der mehreren Zielkomponenten in den dispergierten biologischen Materialien;
wobei das Verfestigungsmittel ein Gemisch aus chemischen Monomeren und Vernetzern umfasst, um ein synthetisches chemisches Gel mit einem chemisch vernetzten Polymernetzwerk zu erzeugen.

2. Verfahren nach Anspruch 1, ferner umfassend (i) Markieren der in Schritt (a) aus der flüssigen Probe erhaltenen Prüfprobe mit einer oder mehreren Sonden für die eine oder die mehreren Zielkomponenten vor Zugabe des Verfestigungsmittels und/oder (ii) Markieren der verfestigten Probe aus Schritt (b) mit einer oder mehreren Sonden für die eine oder die mehreren Zielkomponenten.

3. Verfahren nach Anspruch 2, wobei das Markieren das Inkontaktbringen der in Schritt (a) aus der flüssigen Probe erhaltenen Prüfprobe mit einer molekularen Sonde; und/oder das Inkontaktbringen der verfestigten Probe aus Schritt (b) mit einer molekularen Sonde umfasst, wobei die molekulare Sonde ein Antikörper, ein Fluoreszenzfarbstoff oder eine Nukleinsäuresonde ist.

4. Verfahren nach einem der Ansprüche 1 bis 3, wobei die eine oder die mehreren Zielkomponenten ein zelluläres Ziel oder ein intrazelluläres Ziel umfassen.

5. Verfahren nach Anspruch 1, ferner umfassend das Einführen der optisch geklärten gelierten festen Probe aus Schritt (c) in einen Probenhalter, der in einer Lösung eingetaucht ist, die ein Brechungsindexanpassungs-Material enthält.

6. Verfahren nach Anspruch 1, wobei die flüssige Probe eine flüssige Blutprobe ist.

7. Verfahren nach Anspruch 6, wobei die Prüfprobe aus der flüssigen Blutprobe durch ein Verfahren erhalten wird, das die Entfernung von roten Blutkörperchen und Blutplättchen aus der flüssigen Blutprobe umfasst, und wobei die Prüfprobe mononukleäre Zellen des peripheren Blutes (PBMCs) enthält, die aus der flüssigen Blutprobe isoliert wurden.

8. Verfahren nach Anspruch 7, ferner umfassend:
(i) Markieren der Prüfprobe, die die aus der flüssigen Blutprobe erhaltenen isolierten PBMCs enthält, mit einer oder mehreren Sonden für eine oder mehrere seltene zirkulierende Zellen vor Zugabe des Verfestigungsmittels; und/oder Markieren der Matrixgestützten Probe aus Schritt (b) mit einer oder mehreren Sonden für die eine oder die mehreren seltenen zirkulierenden Zellen; und
(ii) Bildgebung der verfestigten Probe aus Schritt (c) oder der optisch geklärten verfestigten Probe aus Schritt (d), um das Vorhandensein der einen oder der mehreren Sonden zu bestimmen, wodurch das Vorhandensein seltener zirkulierender Zellen in der flüssigen Blutprobe bestimmt wird.

9. Verfahren nach Anspruch 8, wobei das Markieren ferner die Zugabe einer Sonde für weiße Blutkörperchen umfasst.

10. Verfahren nach Anspruch 8 oder 9, wobei die eine oder die mehreren Sonden ein krebsspezifisches Antigen oder eine tumorspezifische DNA- oder RNA-Sequenz erkennen.

11. Verfahren nach einem der Ansprüche 8 bis 10, wobei die eine oder die mehreren Sonden aus einem Antikörper oder einer Nukleinsäuresonde ausgewählt sind, und insbesondere wobei die eine oder die mehreren Sonden den Nachweis eines oder mehrerer von EpCAM-, HER2-, CDX2-, CK20-, CK19-, PD/PDL-1- und EGFR-Antigen oder der entsprechenden Nukleinsäuresequenz ermöglichen.

12. Verfahren nach einem der Ansprüche 8 bis 11, wobei die eine oder die mehreren seltenen zirkulierenden Zellen eine zirkulierende Tumorzelle umfassen.

13. Verfahren nach Anspruch 8 oder 9, wobei die eine oder die mehreren seltenen zirkulierenden Zellen eine zirkulierende Epithelzelle oder zirkulierende Endothelzelle umfassen.

14. Verfahren nach einem der vorhergehenden Ansprüche, wobei vor Schritt (a) die biologische Prüfprobe einem Fixierungsverfahren unterzogen wird, wobei das Fixierungsverfahren das Inkubieren der biologischen Prüfprobe in einer Fixiermittellösung umfasst.

15. Verfahren nach einem der vorhergehenden Ansprüche, wobei die Bildgebung mittels Fluoreszenzmikroskopie, wahlweise mittels Lichtblatt-Fluoreszenzmikroskopie durchgeführt wird.

16. Verfahren nach Anspruch 1, das ferner die Durchführung einer Delipidierung an der verfestigten Probe umfasst.

## Revendications

1. Procédé assisté par matrice pour analyser un échantillon liquide qui comprend des matières biologiques pour un ou plusieurs composants cibles, comprenant :
a) l'ajout d'un agent solidifiant à une éprouvette obtenue de l'échantillon liquide qui comprend les matières biologiques ;
b) la génération d'un échantillon solidifié comprenant des matières biologiques dispersées pour capturer et immobiliser les matières biologiques dispersées dans un état tridimensionnel ;
c) l'introduction d'un matériau d'adaptation d'indice de réfraction dans l'échantillon solidifié ; et
d) l'imagerie de l'échantillon solidifié pour identifier le ou les composants cibles dans les matières biologiques dispersées ;
l'agent solidifiant comprenant un mélange de monomères chimiques et d'agents de réticulation pour créer un gel chimique synthétique ayant un réseau de polymère réticulé chimiquement.

2. Procédé selon la revendication 1, comprenant en outre (i) le marquage de l'éprouvette obtenue de l'échantillon liquide dans l'étape (a) avec une ou plusieurs sondes pour le ou les composants cibles avant d'ajouter l'agent solidifiant ; et/ou (ii) le marquage de l'échantillon solidifié de l'étape (b) avec une ou plusieurs sondes pour le ou les composants cibles.

3. Procédé selon la revendication 2, dans lequel le marquage comprend la mise en contact de l'éprouvette obtenue de l'échantillon liquide dans l'étape (a) avec une sonde moléculaire ; et/ou la mise en contact de l'échantillon solidifié de l'étape (b) avec une sonde moléculaire, la sonde moléculaire étant un anticorps, un colorant fluorescent ou une sonde d'acide nucléique.

4. Procédé selon l'une quelconque des revendications 1 à 3, dans lequel le ou les composants cibles comprennent une cible cellulaire ou une cible intracellulaire.

5. Procédé selon la revendication 1, comprenant en outre l'introduction de l'échantillon solide gélifié optiquement éclairci de l'étape (c) dans un porte-échantillon qui est immergé dans une solution qui comprend un matériau d'adaptation d'indice de réfraction.

6. Procédé selon la revendication 1, dans lequel l'échantillon liquide est un échantillon de sang liquide.

7. Procédé selon la revendication 6, dans lequel l'éprouvette est obtenue de l'échantillon de sang liquide par un procédé qui comprend l'élimination des globules rouges et des plaquettes de l'échantillon de sang liquide, et dans lequel l'éprouvette comprend des cellules mononucléées de sang périphérique (PBMC) isolées de l'échantillon de sang liquide.

8. Procédé selon la revendication 7, comprenant en outre :
(i) le marquage de l'échantillon comprenant les PBMC isolées obtenues de l'échantillon de sang liquide avec une ou plusieurs sondes pour une ou plusieurs cellules rares circulantes avant d'ajouter l'agent solidifiant ; et/ou le marquage de l'échantillon supporté par la matrice de l'étape (b) avec une ou plusieurs sondes pour une ou plusieurs cellules rares circulantes ; et
(ii) l'imagerie de l'échantillon solidifié de l'étape (c) ou de l'échantillon solidifié optiquement éclairci de l'étape (d) pour déterminer la présence de la ou des sondes, ce qui permet de déterminer la présence de cellules rares circulantes dans l'échantillon de sang liquide.

9. Procédé selon la revendication 8, dans lequel le marquage comprend en outre l'ajout d'une sonde pour des globules blancs.

10. Procédé selon la revendication 8 ou 9, dans lequel la ou les sondes reconnaissent un antigène spécifique à un cancer ou une séquence d'ADN ou d'ARN spécifique à une tumeur.

11. Procédé selon l'une quelconque des revendications 8 à 10, dans lequel la ou les sondes sont choisies parmi une sonde d'anticorps ou d'acide nucléique, et plus particulièrement, dans lequel la ou les sondes confèrent la détection d'un ou plusieurs parmi un antigène EpCAM, HER2, CDX2, CK20, CK19, PD/PDL-1 et EGFR ou une séquence d'acides nucléiques correspondante.

12. Procédé selon l'une quelconque des revendications 8 à 11, dans lequel la ou les cellules rares circulantes comprennent une cellule tumorale circulante.

13. Procédé selon la revendication 8 ou 9, dans lequel la ou les cellules rares circulantes comprennent une cellule épithéliale circulante ou une cellule endothéliale circulante.

14. Procédé selon l'une quelconque des revendications précédentes, dans lequel, avant l'étape (a), l'éprouvette biologique est soumise à une procédure de fixation dans lequel la procédure de fixation comprend l'incubation de l'éprouvette biologique dans une solution de fixatif.

15. Procédé selon l'une quelconque des revendications précédentes, dans lequel l'imagerie est effectuée par microscopie à fluorescence, éventuellement, par microscopie à fluorescence de feuille lumineuse.

16. Procédé selon la revendication 1, comprenant en outre la réalisation d'une délipidation sur l'échantillon solidifié.
